# EUROPEAN PATENT APPLICATION

(11) **EP 4 847 309 A1**
(43) Date of publication of application: **02.12.2026**
(21) Application number: 25744765.6
(22) Date of filing: 26.01.2025
(51) Int. Cl.: B60N 2/28, B60N 2/26, A47C 3/18, B60N 2/14

(54) **SAFETY SEAT**

(30) Priority: 26.01.2024 CN 202410116267; 11.07.2024 CN 202410931119; 11.07.2024 CN 202410931421; 11.07.2024 CN 202410931530; 11.07.2024 CN 202421642738 U; 11.07.2024 CN 202410931404; 13.09.2024 CN 202411287919
(71) Applicant: Goodbaby Child Products Co., Ltd., Kunshan, Jiangsu 215331 (CN)
(72) Inventor: KUANG, Zhiyong, Suzhou, Jiangsu 215331 (CN); LV, Wenlong, Suzhou, Jiangsu 215331 (CN); CAI, Hui, Suzhou, Jiangsu 215331 (CN); LIU, Wei, Suzhou, Jiangsu 215331 (CN); LI, Guangyao, Suzhou, Jiangsu 215331 (CN); WANG, Junma, Suzhou, Jiangsu 215331 (CN); LI, Zhaoguo, Suzhou, Jiangsu 215331 (CN); LI, Feng, Suzhou, Jiangsu 215331 (CN); HUANG, Yiming, Suzhou, Jiangsu 215331 (CN)
(74) Representative: Murgitroyd & Company
(86) International application number: PCT/CN2025/075174
(87) International publication number: WO 2025/157302

(57) **Abstract**

A safety seat. The safety seat comprises: a base (1) and a seat (2), wherein the seat (2) has a first position and a second position relative to the base (1); and an actuating structure which is arranged between the base (1) and the seat (2), wherein the seat (2) is moved relative to the base (1) by means of the actuating structure; when the seat (2) is located at the first position, the orientation of the seat (2) is a first direction; when the seat (2) is moved to the second position by means of the actuating structure, the axis of the seat (2) deviates from the axis of the seat (2) when the seat (2) is located at the first position, and the orientation of the seat (2) is a second direction different from the first direction. When the safety seat is installed on an automobile seat for use, and the seat (2) is switched to the second position, the seat (2) can extend outward relative to the base (1), and when a user places a child on the seat (2), the user does not need to bend over or lean into the automobile for operation, thereby facilitating use.

## Description

### FIELD

The present invention relates to the field of child vehicle safety seats, and in particular to a safety seat.

### BACKGROUND

Child vehicle safety seats provide protection for children riding in vehicles. Most safety seats currently available on the market are fixedly installed on vehicle seats. When placing a child in a safety seat, parents usually need to bend over and reach into the vehicle to complete the operation, which is inconvenient. There are also some child safety seats with direction-adjustment functions that accommodate both forward-facing and rearward-facing use for children of different ages. When using these safety seats, the seats can be rotated to face the door before placing the child in it, but the operator still needs to bend over and reach into the vehicle to complete the operation, which is inconvenient.

### SUMMARY

An object of the present invention is to overcome the deficiencies of the conventional art and to provide a novel safety seat, wherein the seat is able to gradually extend outward with respect to the base, or the extent that the seat extends outward with respect to the base progressively increases, or even a portion of the seat is able to extend outside the vehicle door, so that a user does not need to bend over or reach into the vehicle when placing a child onto the seat or lifting a child off the seat, making the use more convenient.

To achieve the above object, the technical solution adopted by the present invention is: a safety seat including
a base;
a seat having a first position and a second position with respect to the base; and
an actuating structure disposed between the base and the seat, the seat being movable with respect to the base via the actuating structure;
wherein, when the seat is in the first position, the seat faces a first direction; when the seat is moved to the second position via the actuating structure, an axis of the seat deviates from an axis of the seat when in the first position, and the seat faces a second direction different from the first direction;
the actuating structure comprises a first shaft and a second shaft disposed on one of the seat and the base, the other one of the seat and the base is provided with grooves corresponding to the first shaft and the second shaft, and in the first position, each of the first shaft and the second shaft is positioned in one corresponding groove so as to restrict rotation of the seat with respect to the base;
when the seat moves from the first position to the second position, the second shaft disengages from the corresponding groove; and the seat rotates about the first shaft as a center of rotation.

Optionally, the seat further has a third position symmetrically arranged with respect to the second position;
when the seat moves from the first position to the third position, the first shaft disengages from the corresponding groove; and the seat rotates about the second shaft as a center of rotation.

Optionally, the axial centerlines of the first shaft and the second shaft are symmetrically distributed on both sides of the first central axis M1 of the base and proximate to the front end of the base.

Optionally, the safety seat further comprises:
a locking structure disposed on one of the seat and the base and configured to selectively lock the first shaft and/or the second shaft; and
an unlocking structure connected to the locking structure and configured to release the locking structure.

Optionally, the locking structure comprises a locking member capable of locking the first shaft and/or the second shaft, the locking member being disposed on the base rotatably in a third direction or in a fourth direction different from the third direction; the unlocking structure comprises an unlocking member, the unlocking member being connected to the locking member via a pulling member, and the locking member is driven via the pulling member to rotate with respect to the base so as to unlock when the unlocking member is unlocking.

Optionally, the base is provided with a first pivot shaft and a second pivot shaft; the locking member rotates with respect to the first pivot shaft or the second pivot shaft in the third direction so as to cause a first locking portion of the locking member to move in a direction away from the first pivot shaft or the second pivot shaft when the unlocking member unlocks.

Optionally, each of the first shaft and the second shaft has a first inclined surface, and the locking member has a second inclined surface; the locking member rotates with respect to the first shaft or the second shaft in the fourth direction when the unlocking member is unlocking, and the second inclined surface and the first inclined surface act upon each other so as to cause a second locking portion of the locking member to move in a direction toward the first shaft or the second shaft.

Optionally, the safety seat further comprises a restricting structure disposed between the locking member and the pulling member, the restricting structure comprising:
a connecting portion connecting the locking member and the pulling member, the connecting portion being provided with a fifth groove; and
a protrusion slidably disposed in the fifth groove;
wherein, the unlocking member drives the fifth groove to slide with respect to the protrusion via the pulling member when the unlocking member is unlocking.

Optionally, the base is provided with a base body and a supporting member disposed on the base body; the seat comprises a carrying body and a carrying member, the carrying member being disposed between the supporting member and the carrying body, the carrying member being configured to engage with the carrying body;
the first shaft and the second shaft are disposed on the supporting member, and the grooves are disposed on a side of the carrying member facing away from the carrying body;
the supporting member is rotatably arranged on the base body.

Another technical solution adopted by the present invention is: a safety seat including
a base;
a seat having a first position and a second position with respect to the base; and
an actuating structure disposed between the base and the seat, the seat being movable with respect to the base via the actuating structure;
wherein, when the seat is in the first position, the seat faces a first direction; when the seat is moved to the second position via the actuating structure, an axis of the seat deviates from an axis of the seat when in the first position, and the seat faces a second direction different from the first direction; the seat further has a third position symmetrically arranged with respect to the second position;
the actuating structure comprises a sliding member and a sliding mating portion cooperating with the sliding member, the sliding mating portion being disposed on the base and extending along the second direction;
the actuating structure further has a first shaft, a second shaft, a third sliding groove and a fourth sliding groove, the first shaft and the second shaft being disposed on the base, the third sliding groove and the fourth sliding groove being disposed on the seat; when the seat moves from the first position to the second position, the sliding member slides toward a first end of the sliding mating portion, and the first shaft slides along the third sliding groove;
when the seat moves from the first position to the third position, the sliding member slides toward a second end of the sliding mating portion, and the second shaft slides along the fourth sliding groove.

Optionally, one end of the third sliding groove extends through an edge of the seat so as to form a first opening in the seat; one end of the fourth sliding groove extends through an edge of the seat to form a second opening in the seat;
when the seat moves from the first position to the second position, the second shaft slides out of the fourth sliding groove from the second opening;
when the seat moves from the first position to the third position, the first shaft slides out of the third sliding groove from the first opening.

Optionally, when the seat is in the first position, the third sliding groove and the fourth sliding groove are symmetrically arranged with respect to a first central axis of the base; a first end of the third sliding groove and a first end of the fourth sliding groove are disposed at a rear end of the seat; a second end of the third sliding groove is closer to the first central axis of the base than the first end of the third sliding groove from an edge of the seat; and a second end of the fourth sliding groove is closer to the first central axis of the base than the first end of the third sliding groove from the edge of the seat toward the first central axis of the base.

Optionally, the first opening has a greater dimension than a dimension of the third sliding groove, and the second opening has a dimension greater than a dimension of the fourth sliding groove.

Optionally, the sliding mating portion is a base sliding groove disposed on the base, and the sliding member slides along the base sliding groove; the first shaft and the second shaft are disposed beside the base sliding groove;
when the seat moves from the first position to the second position, the sliding member and the first shaft approach each other and then move away from each other;
when the seat moves from the first position to the third position, the sliding member and the second shaft approach each other and then move away from each other.

Optionally, the sliding member is a pin slidably disposed in the base sliding groove, or the sliding member is a slider slidably disposed in the base sliding groove.

Optionally, a ratio of a length to a width of the base sliding groove is greater than 2.5.

Optionally, one of the seat and the base is provided with a sliding shaft, and the other one of the seat and the base is provided with a sliding groove, the sliding shaft being slidably disposed in the sliding groove; when the seat moves from the first position to the second position, one end of the sliding groove is configured to limit a rotation angle of the seat; when the seat moves from the first position to the third position, another end of the sliding groove is configured to limit the rotation angle of the seat.

Optionally, the sliding groove is a semicircular groove; in the first position, the sliding groove is symmetrically arranged with respect to the first central axis of the base, and the sliding shaft is disposed at a middle portion of the sliding groove; when the seat is in the second position, the sliding shaft is disposed at one end of the sliding groove; and when the seat is in the third position, the sliding shaft is disposed at another end of the sliding groove.

Optionally, the base is provided with a base body and a supporting member disposed on the base body; the seat comprises a carrying body and a carrying member, the carrying member being disposed between the supporting member and the carrying body, the carrying member being configured to engage with the carrying body;
the first shaft and the second shaft are disposed on the supporting member; the third sliding groove and the fourth sliding groove are disposed on a side of the carrying member facing away from the carrying body; the sliding mating portion is disposed on the supporting member;
the supporting member is rotatably arranged on the base body.

Yet another technical solution adopted by the present invention is: a safety seat including
a base;
a seat having a first position and a second position with respect to the base; and
an actuating structure disposed between the base and the seat, the seat being movable with respect to the base via the actuating structure;
wherein, when the seat is in the first position, the seat faces a first direction; when the seat is moved to the second position via the actuating structure, an axis of the seat deviates from an axis of the seat when in the first position, and the seat faces a second direction different from the first direction; the seat further has a third position symmetrically arranged with respect to the second position;
the actuating structure includes a sliding member and a sliding mating portion cooperating with the sliding member, the sliding mating portion being disposed on the base and extending along the second direction; the sliding member is disposed on the seat;
the actuating structure further includes a first shaft, a second shaft, a first sliding groove and a second sliding groove, the first shaft and the second shaft being disposed on the seat, the first sliding groove and the second sliding groove being disposed on the base; when the seat moves from the first position to the second position, the sliding member slides toward a first end of the sliding mating portion, and the first shaft slides along the first sliding groove;
when the seat moves from the first position to the third position, the sliding member slides toward a second end of the sliding mating portion, and the second shaft slides along the second sliding groove.

Optionally, the sliding mating portion is a base sliding groove disposed on the base; the first sliding groove as a whole extends in a direction obliquely intersecting the base sliding groove; the second sliding groove as a whole extends in a direction obliquely intersecting the base sliding groove; the first sliding groove and the second sliding groove are symmetrically arranged in a left-right direction; and the base sliding groove, the first sliding groove and the second sliding groove are communicated with one another.

Optionally, the base is further provided with a first relief groove and a second relief groove; one end of the first relief groove is connected with the first sliding groove; one end of the second relief groove is connected with the second sliding groove; the first relief groove and the second relief groove both are communicated with the base sliding groove;
the first sliding groove and the second sliding groove are on a same side of the base sliding groove; the first relief groove and the second relief groove are on a same side of the base sliding groove; and the first sliding groove and the second relief groove are on opposite sides of the base sliding groove;
when the first shaft slides along the first sliding groove, the second shaft slides along the second relief groove; and when the second shaft slides along the second sliding groove, the first shaft slides along the first relief groove.

Optionally, the base is provided with a base body and a supporting member disposed on the base body; the seat comprises a carrying body and a carrying member, the carrying member being disposed between the supporting member and the carrying body, the carrying member being configured to engage with the carrying body;
the first shaft and the second shaft are disposed on the carrying member; the first sliding groove and the second sliding groove are disposed on the supporting member; the sliding member is disposed on the carrying member; the sliding mating portion is disposed on the supporting member.

Since the above technical solutions are employed, the present invention has the following advantages compared to the conventional art: the safety seat of the present invention, after the seat is switched from the first position to the second position, the orientation of the seat changes, and the axis of the seat deviates from the axis when the seat was in the first position simultaneously. When the safety seat is mounted and used on a vehicle seat, during the process of switching the seat from the first position to the second position, the seat is able to gradually extend outward with respect to the base, or the extent that the seat extends outward with respect to the base progressively increases, or even a portion of the seat is able to extend outside the vehicle door, such that a user does not need to bend over or reach into the vehicle when placing a child onto the seat or lifting a child off the seat, making the use more convenient.

### BRIEF DESCRIPTION OF THE DRAWINGS

FIG. 1 is a perspective structural view of a safety seat according to one embodiment of the present invention, wherein the carrying body of the seat is an infant basket and the seat is in the first position;
FIG. 2 is a perspective structural view of the safety seat of FIG. 1 in a state where the seat is switched to the second position;
FIG. 3 is a perspective structural view of a safety seat according to another embodiment of the present invention, wherein the carrying body of the seat is a safety seat body and the seat is in the first position;
FIG. 4 is a perspective structural view of the safety seat of FIG. 3 in a state where the seat is switched to the second position;
FIG. 5 is a structural view of the safety seat of FIG. 1 in which the carrying body of the seat is an infant basket;
FIG. 6 is a structural view of the safety seat of FIG. 3 in which the carrying body of the seat is a safety seat body;
FIG. 7 is an overall structural view of the safety seat of the first embodiment of the present invention (with the carrying body of the seat not shown);
FIG. 8 is a longitudinal cross-sectional view of FIG. 7;
FIG. 9 is a diagram of the connection between the locking structure and the unlocking structure on the base in the safety seat of FIG. 7;
FIG. 10 is a diagram of the connection of the supporting member with the first shaft and the second shaft, and with the locking structure and the unlocking structure, in the safety seat of FIG. 7;
FIG. 11 is a perspective structural view of FIG. 10;
FIG. 12 is a structural view of the connection between the unlocking structure and the locking structure in the safety seat of FIG. 7;
FIG. 13 is a top structural view of FIG. 7, with the seat in the first position;
FIG. 14 is a top structural view based on FIG. 13, when the seat is switched to the second position;
FIG. 15 is a top structural view based on FIG. 13, when the seat is switched to the third position;
FIG. 16 is a top structural view of the safety seat of the second embodiment of the present invention (with the carrying body of the seat not shown), with the seat in the first position;
FIG. 17 is a top structural view based on FIG. 16, when the seat is switched to the second position;
FIG. 18 is a top structural view based on FIG. 16, when the seat is switched to the third position;
FIG. 19 is a diagram of the connection between the supporting member and the first shaft and the second shaft, and the connection between the locking structure and the unlocking structure, in the safety seat of FIG. 16;
FIG. 20 is a structural view of the carrying member in the safety seat of FIG. 16;
FIG. 21 is a diagram of the connection between the locking structure and the unlocking structure on the base in the safety seat of FIG. 16;
FIG. 22 is a structural view of the connection between the unlocking structure and the locking structure in the safety seat of FIG. 16;
FIG. 23 is a schematic view of the unlocking principle of the unlocking structure in the safety seat of FIG. 16;
FIG. 24 is a top view of a safety seat according to the third embodiment of the present invention in the first position;
FIG. 25 is an axonometric view of the safety seat in the first position, based on FIG. 24;
FIG. 26 is a top view of the safety seat in the second position or the third position, based on FIG. 24;
FIG. 27 is an axonometric view of the safety seat in the second position or the third position, based on FIG. 26;
FIG. 28 is a partial structural view of the seat, based on FIG. 24;
FIG. 29 is an exploded view of the safety seat, based on FIG. 24;
FIG. 30 is a top view of an intermediate state during movement of the safety seat from the first position to the second position or the third position, based on FIG. 24;
FIG. 31 is an axonometric view of the intermediate state during movement of the safety seat from the first position to the second position or the third position, based on FIG. 30;
FIG. 32 is a top view of the safety seat according to the fourth embodiment of the present invention in the first position;
FIG. 33 is a top view of an intermediate state during movement of the safety seat from the first position to the second position, based on FIG. 32;
FIG. 34 is a top view of an intermediate state of the safety seat in the second position, based on FIG. 32;
FIG. 35 is a top view of an intermediate state during movement of the safety seat from the first position to the third position, based on FIG. 32;
FIG. 36 is a top view of an intermediate state of the safety seat in the third position, based on FIG. 32;
FIG. 37 is an exploded view of the safety seat, based on FIG. 32;
FIG. 38 is a structural view of the base, based on FIG. 32;
FIG. 39 is a structural view of the carrying member, based on FIG. 32.
FIG. 40 is an exploded view of the safety seat (with the carrying body not shown) according to the fifth embodiment of the present invention;
FIG. 41 is a structural view of the sliding member according to the fifth embodiment of the present invention;
FIG. 42 is a structural view of the safety seat (with the carrying body not shown) in the first position according to the fifth embodiment of the present invention;
FIG. 43 is a top-view perspective view of the safety seat (with the carrying body not shown) in the first position according to the fifth embodiment of the present invention;
FIG. 44 is a structural view of the safety seat (with the carrying body not shown) in the second position according to the fifth embodiment of the present invention;
FIG. 45 is a top-view perspective view of the safety seat (with the carrying body not shown) in the second position according to the fifth embodiment of the present invention;
FIG. 46 is a structural view of the safety seat (with the carrying body not shown) in the third position according to the fifth embodiment of the present invention;
FIG. 47 is a top-view perspective view of the safety seat (with the carrying body not shown) in the third position according to the fifth embodiment of the present invention;
FIG. 48 is a top-view perspective view of the safety seat (with the carrying body and base not shown) in the first position according to the sixth embodiment of the present invention;
FIG. 49 is a top-view perspective view of the safety seat (with the carrying body and base not shown) in the second position according to the sixth embodiment of the present invention;
FIG. 50 is a top-view perspective view of the safety seat (with the carrying body and base not shown) in the third position according to the sixth embodiment of the present invention.
FIG. 51 is a structural view of the safety seat according to embodiment seven of the present invention;
FIG. 52 is an exploded view of the safety seat according to embodiment seven of the present invention;
FIG. 53 is a structural view of the actuating structure according to embodiment seven of the present invention;
FIG. 54 is a top view of the safety seat according to embodiment seven of the present invention;
FIG. 55 is a view of one state during movement of the rotating frame from the first position to the second position according to embodiment seven of the present invention;
FIG. 56 is a schematic view of the rotating frame in the second position according to embodiment seven of the present invention;
FIG. 57 is a view of one state during movement of the rotating frame from the first position to the third position according to embodiment seven of the present invention;
FIG. 58 is a schematic view of the rotating frame in the third position according to embodiment seven of the present invention;
FIG. 59 is a structural view of the safety seat including a base seat according to embodiment seven of the present invention.
FIG. 60 is a schematic view of the safety seat in the first position facing forward according to embodiment ten of the present invention;
FIG. 61 is a schematic view of the safety seat in the first position facing rearward according to embodiment ten of the present invention;
FIG. 62 is a structural view of the carrying member in the first position according to embodiment ten of the present invention;
FIG. 63 is a structural view of the carrying member in the second position according to embodiment ten of the present invention;
FIG. 64 is a structural view of the carrying member in the third position according to embodiment ten of the present invention;
FIG. 65 is a structural view of the carrying member according to embodiment ten of the present invention;
FIG. 66 is a structural view of the supporting member according to embodiment ten of the present invention;
FIG. 67 is an exploded view of a partial structure of the safety seat according to embodiment ten of the present invention;
FIG. 68 is a cross-sectional view of the partial structure of the safety seat according to embodiment ten of the present invention;
FIG. 69 is a structural view of the supporting member in the safety seat according to embodiment eleven of the present invention;
FIG. 70 is a structural view of the safety seat according to embodiment eleven of the present invention;
FIG. 71 is a structural view of the safety seat according to embodiment twelve of the present invention; wherein:
   1 - base; 11 - base body; 2 - seat; 20 - carrying member; 201 - groove; 202 - seat mounting structure; 21 - infant basket; 22 - safety seat body; 23 - guiding column;
   3 - supporting member; 31 - first sliding groove; 32 - second sliding groove; 33 - relief groove; 43 - third sliding groove; 44 - fourth sliding groove; 45 - first relief groove; 46 - second relief groove;
   4 - first shaft; 41 - first inclined surface; 5 - second shaft;
   51 - guiding shaft; 52 - base sliding groove; 53 - sliding member; 531 - arc-shaped groove; 532 - shaft hole; 54 - sliding shaft; 55 - sliding groove;
   6 - locking structure; 61 - first locking member; 611 - first locking portion; 612 - first connecting portion; 613 - first guiding groove; 61a - second inclined surface; 61b - second locking portion;
   62 - second locking member; 621 - first locking portion; 622 - second connecting portion; 623 - second guiding groove; 63 - first pivot shaft; 64 - first guiding column; 65 - second pivot shaft; 66 - second guiding column; 67 - first spring; 68 - second spring;
   7 - unlocking structure; 71 - first pulling member; 72 - second pulling member; 73 - first unlocking button; 74 - second unlocking button; 8 - elastic member; 9 - swing member; 91 - first swing rod shaft; 92 - second swing rod shaft; 10 - pivot shaft;
   a - base axis; b - axis; M1 - first central axis; M2 - second central axis.
   100 - base frame; 200 - rotating frame; 300 - actuating structure; 310 - actuation guiding member; 311 - rack; 320 - rotating disk; 400 - auxiliary guiding structure; 410 - guiding rotating shaft; 420 - guiding groove; 500 - base seat; X - preset direction.
   410 - first moving shaft; 42 - first guiding structure; 4201 - first arc segment; 4202 - second arc segment; 421 - left end portion; 422 - right end portion;
   510 - second moving shaft; 520 - second guiding structure; 521 - front end portion; 522 - rear end portion;
   60 - limiting ring; 70 - first bottom plate; 80 - second bottom plate;
   c - central axis; M3 - longitudinal axis.

### DETAILED DESCRIPTION

The technical solution of the present invention will be further elaborated below in conjunction with the accompanying drawings and specific embodiments.

The following descriptions regarding orientations such as front, rear, left, right, up, and down are all defined with reference to the directions as observed by a child seated in the safety seat when the safety seat is installed in the forward orientation on a vehicle seat, for the sole purpose of clearly describing the relative positional relations of the components in the safety seat.

As shown in the figures, a safety seat provided by the present invention comprises a base 1 and a seat 2, the seat 2 having a first position and a second position with respect to the base 1. The safety seat further comprises an actuating structure disposed between the base 1 and the seat 2, the seat 2 being able to move with respect to the base 1 via the actuating structure. When the seat 2 is in the first position, the seat 2 faces a first direction; when the seat 2 is moved to the second position via the actuating structure, the axis of the seat 2 deviates from the axis of the seat 2 when in the first position, and the seat 2 faces a second direction different from the first direction.

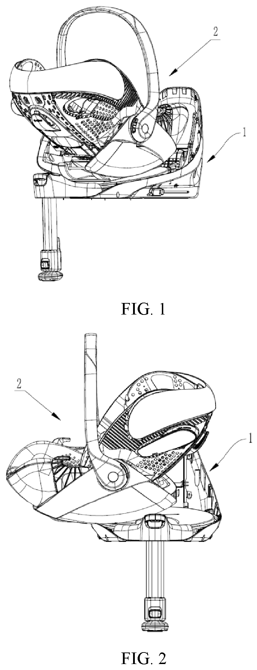

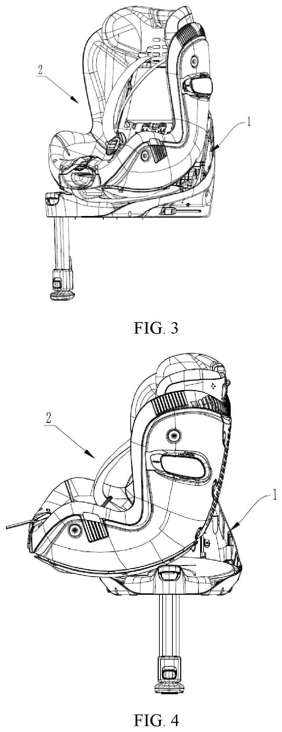

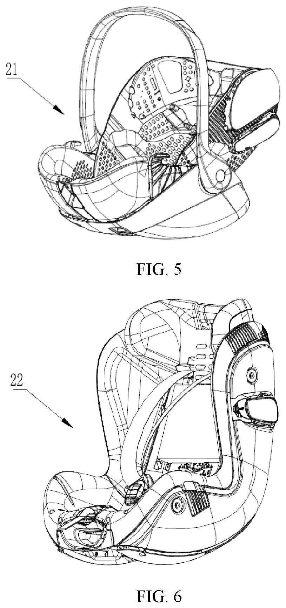

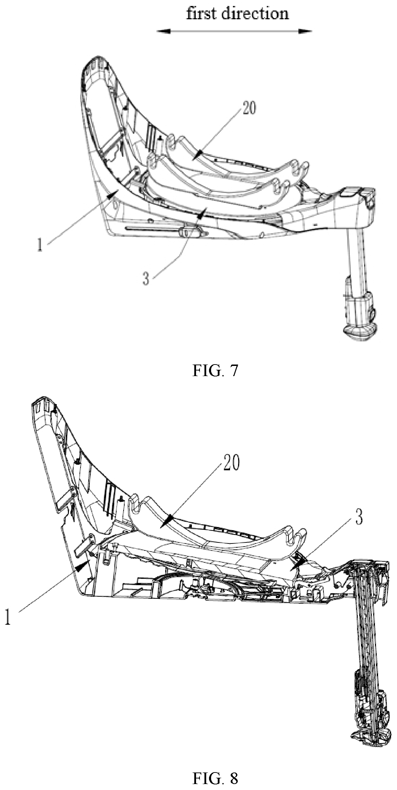

Specifically, the seat 2 comprises a carrying body and a carrying member 20, and the carrying member 20 is disposed at a bottom portion of the carrying body and engages with the carrying body. The base 1 is provided with a supporting member 3. As shown in FIG. 7, the seat 2 is connected to the base 1 via the carrying member 20, specifically connected to the supporting member 3 on the base 1. The carrying member 20 is disposed between the supporting member 3 and the carrying body. The carrying body and the carrying member 20 may be integrally formed with, or separately provided and can be assembled or disassembled, such that different carrying bodies can be selected according to usage needs and engaged with the carrying member 20 and then be installed on the base 1. The carrying body may specifically be an infant basket 21 as shown in FIGs. 1, 2 and 5, suitable for use by infants and young children of a younger age group, or a safety seat body 22 as shown in FIGs. 3, 4 and 6, suitable for use by children of an older age group.

The above-mentioned first direction may be forward or rearward, and correspondingly the second direction is leftward or rightward. That is, when the seat 2 is in the first position it faces forward or rearward, and when switched to the second position it faces left or right.

Specifically, as shown in FIGs. 1 to 2, the carrying body of the seat 2 is the infant basket 21. In the state shown in FIG. 1, the infant basket 21 is in the first position facing rearward; in the state shown in FIG. 2, the infant basket 21 is in the second position facing rightward. The axis of the infant basket 21 in the state of FIG. 2 deviates from the axis of the infant basket 21 in the state of FIG. 1, and the infant basket 21 protrudes further outward with respect to the base 1 in the left-right direction. Thus, when the safety seat is installed on a vehicle seat and the infant basket 21 is switched to the second position, the infant basket 21 is able to be closer to the vehicle door frame, or even have a portion extending outside the door frame, facilitating the parent in placing a child on the infant basket 21 and restrain the child on the infant basket 21.

Similarly, as shown in FIGs. 3 to 4 and FIG. 6, the carrying body of the seat 2 is the safety seat body 22, which is suitable for use by older children. In the state shown in FIG. 3, the safety seat body 22 is in the first position facing forward; in the state shown in FIG. 4, the safety seat body 22 is in the second position facing rightward. The axis of the safety seat body 22 in the state of FIG. 4 deviates from the axis of the safety seat body 22 in the state of FIG. 3, and the safety seat body 22 protrudes further outward with respect to the base 1 in the left-right direction, facilitating the parent in placing a child on the safety seat body 22 and restrain the child on the safety seat body 22.

In some embodiments, the seat 2 further has a third position symmetrically arranged with respect to the second position. The seat 2 is also able to move to the third position via the actuating structure. The orientation of the seat 2 in the third position is opposite to the orientation in the second position. That is, the orientations of the seat 2 in the second position and the third position are rightward and leftward, respectively, thereby enabling the user to conveniently select switching the seat 2 to the second position or the third position according to the installation position of the safety seat on the vehicle seat, so as to face the door on the corresponding side.

In some embodiments, when the seat 2 moves from the first position to the second position via the above actuating structure, a smooth first motion path is formed, and the seat 2 is able to continuously rotate with respect to the base 1 along the first motion path; when the seat 2 moves from the first position to the third position via the above actuating structure, a smooth second motion path is formed, and the seat 2 is also able to continuously rotate with respect to the base 1 along the second motion path. The first motion path and the second motion path intersect each other, and the seat 2 always remains in the same plane when moving along the first motion path and when moving along the second motion path; optionally, the first motion path and the second motion path are in the same horizontal plane.

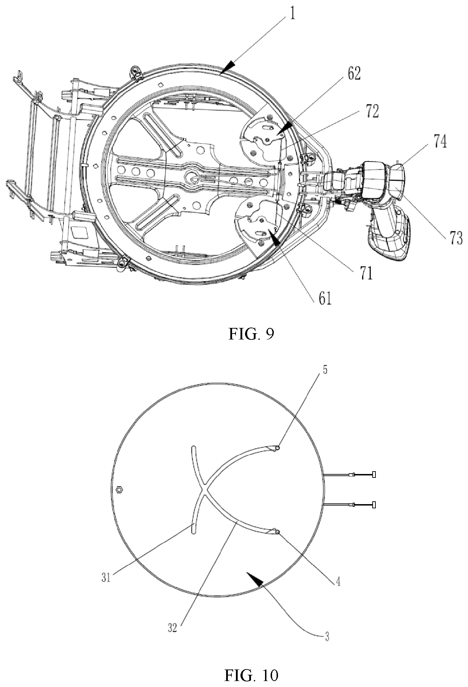

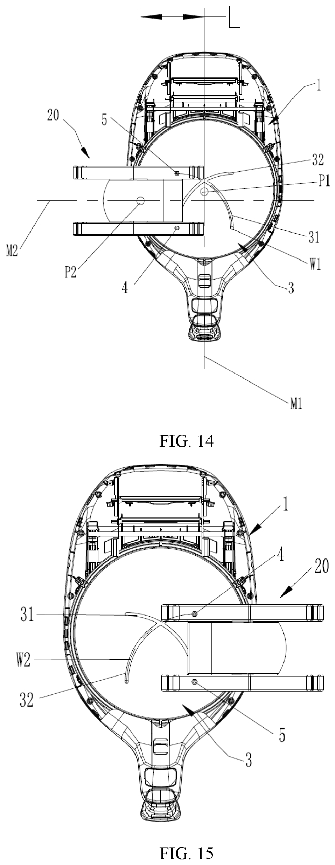

In the first embodiment, as shown in FIGs. 7 to 15, the actuating structure comprises a first shaft 4 and a second shaft 5. The first shaft 4 and the second shaft 5 are disposed on the seat 2, specifically on the carrying member 20 of the seat 2. When the seat 2 moves along the first motion path W1, the axial direction of the first shaft 4 is fixed and rotates circumferentially with respect to the base 1 or the seat 2, and the seat 2 moves along the first motion path W1, as shown in FIG. 14; when the seat 2 moves along the second motion path W2, the axial direction of the second shaft 5 is fixed and rotates circumferentially with respect to the base 1 or the seat 2, and the seat 2 moves along the second motion path W2, as shown in FIG. 15. Specifically, the base 1 has a first central axis M1 extending in the longitudinal direction; when the seat 2 is in the first position, the axial centerlines of the first shaft 4 and the second shaft 5 are symmetrically distributed on both sides of the first central axis M1 of the base 1 and proximate to a front end of the base 1.

In the first embodiment shown in FIGs. 7 to 15, the actuating structure further comprises a first sliding groove 31 and a second sliding groove 32, which are arranged to correspond to the first shaft 4 and the second shaft 5, respectively. The first sliding groove 31 and the second sliding groove 32 are disposed on the base 1 and extend in intersecting arcs, so that the first shaft 4 or the second shaft 5 drives the seat 2 to move in the first sliding groove 31 or the second sliding groove 32; the centers of curvature of the first sliding groove 31 and the second sliding groove 32 are offset from the above-mentioned first central axis M1 of the base 1. Here, the first sliding groove 31 and the second sliding groove 32 are disposed on the supporting member 3; the first motion path W1 coincides with or partially coincides with the first sliding groove 31; the start and end points of the first motion path W1 are the two end portions of the first sliding groove 31, respectively; the second motion path W2 coincides with or partially coincides with the first sliding groove 32; the start and end points of the second motion path W2 are the two end portions of the first sliding groove 32, respectively. The supporting member 3 is disc-shaped and is able to rotate on the base 1 about a centerline extending in the up-down direction, so that the supporting member 3 rotates 180° or 360° as a whole, enabling the seat 2 to switch between a forward-facing orientation and a rearward-facing orientation; the centers of curvature of the above-mentioned first sliding groove 31 and 32 are also offset from the center of the supporting member 3.

As shown in FIG. 14, when the seat 2 moves from the first position to the second position, the first shaft 4 is axially retained, and the second shaft 5 drives the seat 2 to move in the first sliding groove 31, causing the seat 2 as a whole to continuously rotate about the axial centerline of the first shaft 4, thereby reaching the second position; as shown in FIG. 15, when the seat 2 moves from the first position to the third position, the second shaft 5 is axially retained, and the first shaft 4 drives the seat 2 to move in the second sliding groove 32, causing the seat 2 as a whole to continuously rotate about the second shaft 5, thereby reaching the third position.

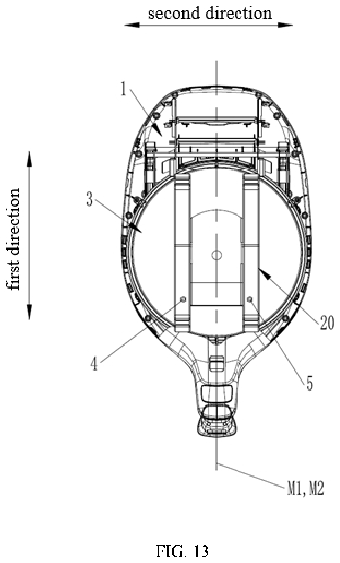

As shown in FIGs. 13, 14 and 15, when the seat 2 is in the first position, it has a first axis extending in the vertical direction, whose projection in the top view is P1; the first axis perpendicularly intersects the first central axis M1 of the base 1; the seat 2 has a second central axis M2 extending in the longitudinal direction, the second central axis M2 coincides with the first central axis M1 of the base 1, and the projection P1 falls on the second central axis M2 of the seat 2.

When the seat 2 is in the second position or the third position, the second central axis M2 of the seat 2 is rotated by a certain angle, here specifically rotated to be perpendicular to the first central axis M1 of the base 1; the seat 2 has a second axis extending in the vertical direction, whose projection in the top view is P2; in the second direction, a distance between the above-mentioned first axis and the second axis, i.e., a distance L between P1 and P2, is greater than 0, for example 50 mm < L < 250 mm.

In other embodiments, the first shaft 4 and the second shaft 5 may alternatively be disposed on the base 1, with the first sliding groove 31 and the second sliding groove 32 disposed on the seat 2.

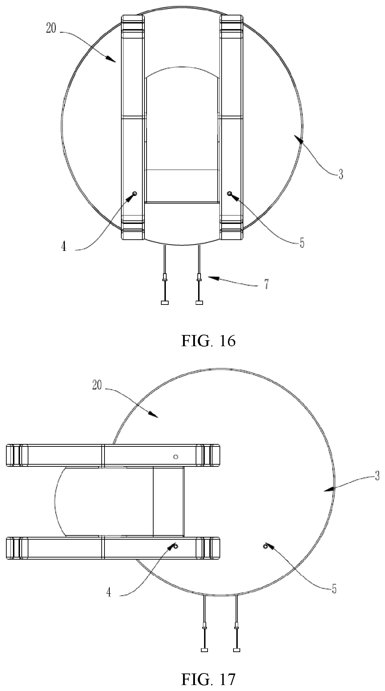

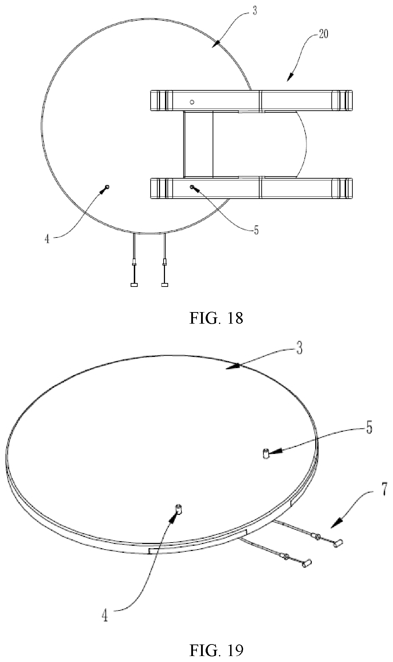

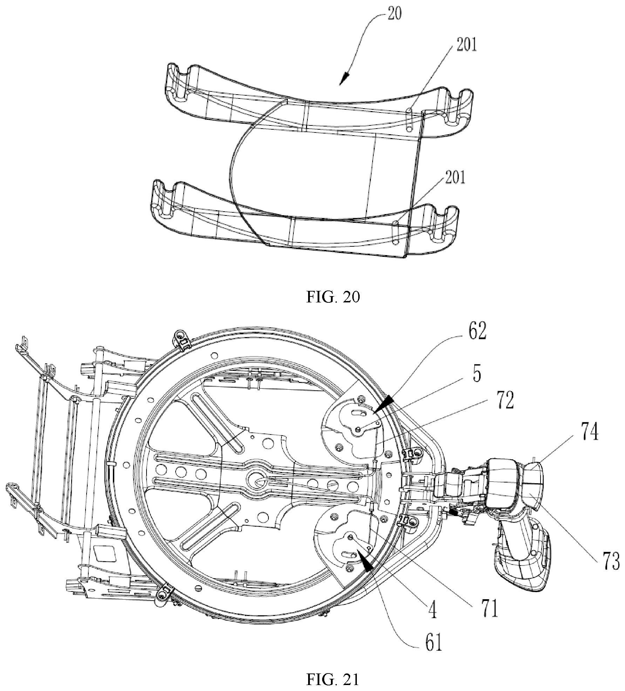

FIGs. 16 to 23 provide a second embodiment of the safety seat. In this embodiment, the actuating structure further comprises two grooves 201, which are arranged to correspond to the first shaft 4 and the second shaft 5, respectively. The first shaft 4 and the second shaft 5 are disposed retractably in the axial direction on one of the seat 2 and the base 1, and the groove 201 is disposed on the other one of the base 1 and the seat 2, to allow the first shaft 4 and the second shaft 5 to be inserted into or disengaged from the grooves 201. The first shaft 4 and the second shaft 5 may specifically be configured to extend and retract axially with respect to the seat 2 or the base 1 by axial sliding, or by shortening in length along their own axes. Here, the first shaft 4 and the second shaft 5 are disposed on the supporting member 3 of the base 1; the two grooves 201 are disposed on the seat 2, specifically on the carrying member 20 of the seat 2. During the process of switching the seat 2 from the first position to the second position, as shown in FIG. 17, the second shaft 5 is disengaged from the groove 201, causing the seat 2 to rotate about the first shaft 4 with respect to the base 1, thereby moving along the first motion path to reach the second position; during the process of switching the seat 2 from the first position to the third position, as shown in FIG. 18, the first shaft 4 is disengaged from the groove 201, causing the seat 2 to rotate about the second shaft 5 with respect to the base 1, thereby moving along the second motion path to reach the third position.

In some embodiments, a first guiding path is formed when the seat 2 moves from the first position to the second position, and a second guiding path is formed when the seat 2 moves from the first position to the third position. Because the third position is symmetrically arranged with respect to the second position, the first guiding path and the second guiding path are symmetrically arranged, ensuring that the seat 2 is able to move smoothly and stably to the second position or the third position. Optionally, the first guiding path and the second guiding path are symmetrically arranged with respect to the first central axis M1 of the base 1, so that the external position states of the seat 2 in the second position and the third position are symmetric with respect to the first central axis M1 of the base 1.

Based on the above first motion path W1 and second motion path W2, in order to allow the seat 2 to move smoothly between the first position and the second position, or between the first position and the third position, the first guiding path and the second guiding path are both smooth arcs, and the first guiding path and the second guiding path intersect each other. Optionally, the first guiding path coincides with the second motion path W2, and the second guiding path coincides with the first motion path W1; that is, when the first shaft 4 slides in one first sliding groove 31 to form the first motion path, the path of the second shaft 5 sliding in the other first sliding groove 32 is the first guiding path; when the second shaft 5 slides along the second motion path in the other first sliding groove 32, the path of the first shaft 4 sliding in the one first sliding groove 31 is the second guiding path. The cooperation of the first shaft 4 with the first sliding groove 32 and the cooperation of the second shaft 5 with the first sliding groove 32 each have two functions, simplifying the connection structure between the seat 2 and the base 1.

The safety seat further comprises a locking structure 6 and an unlocking structure 7. The locking structure 6 is disposed on one of the seat 2 and the base 1 and is configured to selectively lock the first shaft 4 and/or the second shaft 5; the unlocking structure 7 is connected to the locking structure 6 and configured to release the locking structure 6.

In the embodiment shown in FIGs. 7 to 15, the locking structure 6 comprises a locking member capable of locking the first shaft 4 and/or the second shaft 5, the locking member being rotatably disposed on the base 1; the unlocking structure 7 comprises an unlocking member connected to the locking member via a pulling member, and when the unlocking member unlocks, the locking member is driven via the pulling member to rotate with respect to the base 1 so as to unlock.

The safety seat further comprises a restricting structure disposed between the locking member and the pulling member. The restricting structure comprises a connecting portion and a protrusion; the connecting portion connects the locking member and the pulling member and is provided with a fifth groove; the protrusion is slidably disposed in the fifth groove; when the unlocking member unlocks, the unlocking member drives the fifth groove to slide with respect to the protrusion via the pulling member, thereby limiting the distance traveled by the locking member and defining the rotation path of the locking member as the locking member rotates with respect to the base 1. An elastic member for resetting may be provided between the base 1 and the unlocking structure 7.

In the specific embodiment, the locking structure 6 comprises two locking members, namely a first locking member 61 and a second locking member 62. The first locking member 61 is configured to lock the first shaft 4, and the second locking member 62 is configured to lock the second shaft 5. The first locking member 61 is rotatably disposed on the base 1 about a first pivot shaft 63, and the second locking member 62 is rotatably disposed on the base 1 about a second pivot shaft 65. The unlocking structure 7 comprises two unlocking members, namely a first unlocking button 73 and a second unlocking button 74. One end of a first spring 67 and one end of a second spring 68 are each connected to the base 1, and the other ends are connected to the first unlocking button 73 and the second unlocking button 74, respectively, via the interlocking structure of the unlocking structure 7. The first unlocking button 73 is connected to the second locking member 62 via a first pulling member 71, and is able to drive the second locking member 62 to rotate with respect to the base 1 for unlocking; the second unlocking button 74 is connected to the first locking member 61 via a second pulling member 72, and is able to drive the first locking member 61 to rotate with respect to the base 1 for unlocking.

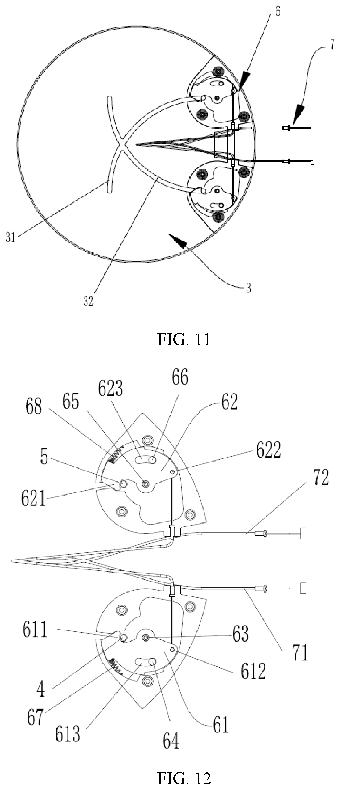

More specifically, as shown in FIG. 12, the first locking member 61 comprises a first locking portion 611 and a first connecting portion 612. The first locking portion 611 may be a free end of the first locking member 61 and is configured to hook onto the first shaft 4 to fix it with respect to the base 1; the first connecting portion 612 is configured to connect with the second pulling member 72. The first locking portion 611 and the first connecting portion 612 are disposed on opposite sides of the first pivot shaft 63. The first connecting portion 612 is further provided with a fifth groove, here specifically a first guiding groove 613; the first guiding groove 613 is an arc-shaped groove centered on the axial centerline of the first pivot shaft 63. The base 1 is further provided with a first protrusion, here specifically a first guiding column 64; the first guiding column 64 is slidably inserted in the first guiding groove 613, and the two cooperate with each other to provide guidance for the rotation of the first locking member 61 about the first pivot shaft 63.

Similarly, the second locking member 62 comprises a first locking portion 621 and a second connecting portion 622. The first locking portion 621 may be the free end of the first locking portion 621; the second locking portion 621 is configured to hook onto the second shaft 5 to fix it with respect to the base 1; the second connecting portion 622 is configured to connect with the first pulling member 71. The second locking portion 621 and the second connecting portion 622 are disposed on opposite sides of the second pivot shaft 65. The second connecting portion 622 is further provided with a second guiding groove 623; the second guiding groove 623 is an arc-shaped groove centered on the axial centerline of the second pivot shaft 65. The base 1 is further provided with a second guiding column 66; the second guiding column 66 is inserted in the second guiding groove 623, and the two cooperate with each other to provide guidance for the rotation of the second locking member 62 about the second pivot shaft 65.

When the first unlocking button 73 is operated, the second pulling member 72 pulls the second connecting portion 622 so that the second locking member 62 rotates about the second pivot shaft 65 in a third direction (clockwise in the embodiment), the second spring 68 is stretched, and the second locking portion 621 moves away from the second shaft 5 to release the hook on the second shaft 5; then the seat 2 is driven to rotate, and the second shaft 5 is able to move within the first sliding groove 32, so that the seat 2 rotates about the first shaft 4 and moves with respect to the base 1 along the first motion path, thereby switching the seat 2 from the first position to the second position. During this process, the second locking member 62 switches from the state of locking the second shaft 5 to the state of releasing the second shaft 5. When the seat 2 is switched from the second position back to the first position, the second pulling member 72 pulls the second connecting portion 622 so that the second locking member 62 rotates about the second pivot shaft 65 in the opposite direction, the second spring 68 resets, and the first locking portion 621 hooks onto the second shaft 5. During this process, the second locking member 62 switches from the state of releasing the second shaft 5 to the state of locking the second shaft 5, while the first locking member 61 always locks or releases the first shaft 4.

When the second unlocking button 74 is operated, the first pulling member 71 pulls the first connecting portion 612 so that the first locking member 61 rotates about the first pivot shaft 63, the first spring 67 is stretched, and the first locking portion 611 moves away from the first shaft 4 to release the hook on the first shaft 4; then the seat 2 is driven to rotate, and the first shaft 4 is able to move within the first sliding groove 31, so that the seat 2 rotates about the second shaft 5 and moves with respect to the base 1 along the second motion path, thereby switching the seat 2 from the first position to the third position. During this process, the first locking member 61 switches from the state of locking the first shaft 4 to the state of releasing the first shaft 4. When the seat 2 is switched from the second position back to the first position, the first pulling member 71 pulls the first connecting portion 612 so that the first locking member 61 rotates about the first pivot shaft 63 in the opposite direction, the first spring 67 resets, and the first locking portion 621 hooks onto the second shaft 5. During this process, the first locking member 61 switches from the state of releasing the first shaft 4 to the state of locking the first shaft 4, while the second locking member 62 always locks or releases the second shaft 5.

In the embodiment shown in FIGs. 16 to 23, the arrangement of the locking structure 6 differs from that in the embodiment shown in FIGs. 7 to 15. Specifically, in the locking structure 6, the first locking member 61 and the second locking member 62 cooperate with the mating structure and the elastic member 8 so that the first shaft 4 and the second shaft 5 extend axially toward the carrying member 20 and are inserted into the corresponding grooves 201.

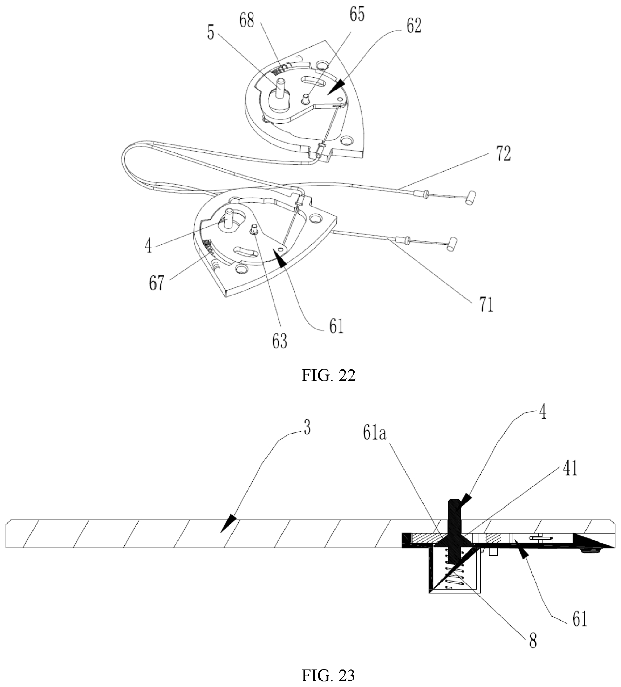

A mating structure is provided between the first locking member 61 and the first shaft 4, so that when the first locking member 61 is driven to rotate, it is able to drive the first shaft 4 to retract away from the carrying member 20. The mating structure may be a wedge-surface structure provided between the two; as shown in FIG. 22, the first shaft 4 is provided with a first inclined surface 41, a second inclined surface 61a is provided at a lower portion of the first locking member 61, and the first locking member 61 has a second locking portion 61b, which may be a free end of the first locking member 61 or a part of a closed ring of the first locking member 61 and corresponds to a starting end of the second inclined surface 61a (as shown in FIG. 22). When the first locking member 61 is in the locked position, the area of the second inclined surface 61a acting on the first inclined surface 41 is small, so that the horizontal height of the first inclined surface 41 with respect to the second inclined surface 61a is higher, and the first shaft 4 is inserted into the corresponding groove 201; when the first locking member 61 rotates about the first shaft 4, the area of the second inclined surface 61a acting on the first inclined surface 41 gradually increases, forcing the first shaft 4 to slide downward or shorten, and the second locking portion 61b moves toward the first shaft 4, so that the first shaft 4 disengages from the corresponding groove 201, achieving unlocking. Similarly, a mating structure is also provided between the second locking member 62 and the second shaft 5, so that when the second locking member 62 is driven to rotate, it is able to drive the second shaft 5 to slide away from the carrying member 20 or shorten, thereby disengaging the second shaft 5 from the corresponding groove 201 to achieve unlocking.

In this way, when the first unlocking button 73 is operated for unlocking, the second pulling member 72 pulls the second locking member 62 to rotate about the second shaft 5, the second locking member 62 rotates in a fourth direction (counterclockwise in the embodiment) opposite to the third direction, the second inclined surface 61a pushes the first inclined surface 41 downward, then the second shaft 5 slides or retracts in the axial direction, and the free end of the second locking member 62 moves toward the second shaft 5, so that the second shaft 5 disengages from the groove 201 on the carrying member 20 to achieve unlocking; then the seat 2 is driven to rotate, and the seat 2 rotates about the first shaft 4 and moves with respect to the base 1 along the first motion path, thereby switching the seat 2 from the first position to the second position.

When the second unlocking button 74 is operated for unlocking, the first pulling member 71 pulls the first locking member 61 to rotate about the first shaft 4, the second inclined surface 61a pushes the first inclined surface 41 downward, then the first shaft 4 slides or retracts in the axial direction, so that the free end of the first locking member 61 moves toward the first shaft 4, thereby the first shaft 4 disengages from the groove 201 on the carrying member 20 to achieve unlocking; then the seat 2 is driven to rotate, and the seat 2 rotates about the second shaft 5 and moves with respect to the base 1 along the second motion path, thereby switching the seat 2 from the first position to the third position.

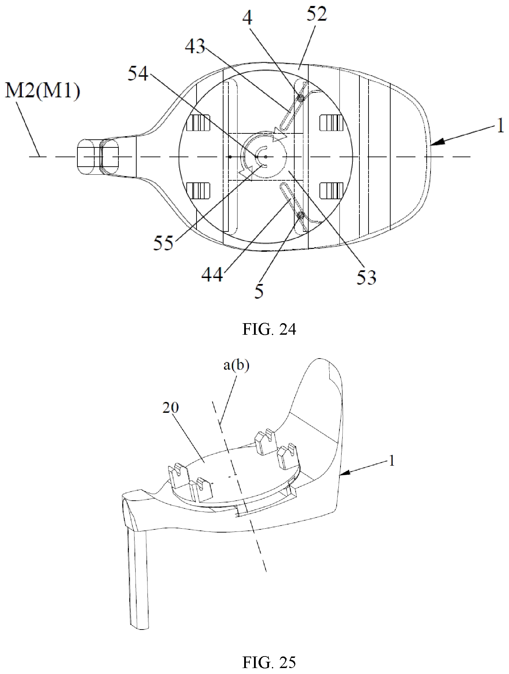

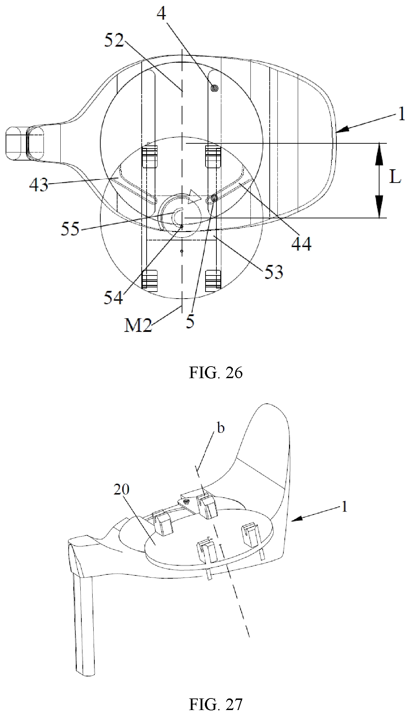

In other embodiments, FIGs. 24 and 25 are schematic views of the seat 2 in the first position, and FIGs. 26 and 27 are schematic views of the seat 2 in the second position or the third position. As shown in FIGs. 24 to 27, the first motion path and the second motion path do not intersect each other, and the seat 2 always remains in the same plane when moving along the first motion path and when moving along the second motion path; optionally, the first motion path and the second motion path are in the same horizontal plane.

The base 1 has a base axis a; the seat 2 has a second central axis M2 extending in the longitudinal direction of the seat 2, and an axis b perpendicularly intersecting the second central axis M2; the axis b is parallel to the base axis a. When the seat 2 is in the first position, the axis b coincides with the base axis a. When the seat 2 is in the second position or the third position, the base axis a intersects the second central axis M2, and a distance L between the base axis a and the axis b is greater than 0, for example 50 mm < L < 250 mm. When the seat 2 is in the second position or the third position, the seat 2 does not displace in the front-rear direction and extends a distance L in the left or right direction, so that the user does not need to bend over or reach into the vehicle when placing a child onto the seat 2 or lifting a child off the seat 2, making use more convenient.

For the third embodiment, the actuating structure comprises a first shaft 4 and a second shaft 5 disposed on one of the seat 2 and the base 1, and the other one of the seat 2 and the base 1 is provided with a third sliding groove 43 and a fourth sliding groove 44 corresponding to the first shaft 4 and the second shaft 5. The third sliding groove 43 and the fourth sliding groove 44 are both straight grooves. When the seat 2 moves along the first motion path, the seat 2 is axially retained and rotates with respect to the base 1; the first shaft 4 slides into the third sliding groove 43, and the second shaft 5 slides out of the fourth sliding groove 44, forming the first motion path without interfering with the rotation of the seat 2 with respect to the base 1, so that the seat 2 is able to move from the first position to the second position. When the seat 2 moves along the second motion path, the seat 2 is axially retained and rotates with respect to the base 1; the second shaft 5 slides into the fourth sliding groove 44, and the first shaft 4 slides out of the third sliding groove 43, forming the second motion path without interfering with the rotation of the seat 2 with respect to the base 1, so that the seat 2 is able to move from the first position to the third position. Optionally, the third sliding groove 43 and the fourth sliding groove 44 are disposed on the seat 2, and the first shaft 4 and the second shaft 5 are disposed on the base 1. The seat 2 is rotatably connected to the base 1; the first shaft 4 and the second shaft 5 are each rotatable about their own axes, ensuring smooth rotation of the seat 2.

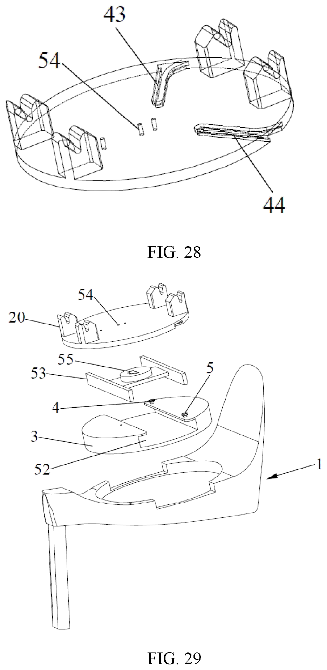

As shown in FIGs. 28 and 29, one end of the third sliding groove 43 extends through an edge of the seat 2 or the base 1 and forms a first opening at the edge of the seat, so that the first shaft 4 can slide out of the third sliding groove 43 from the first opening; one end of the fourth sliding groove 44 extends through an edge of the seat 2 or the base 1 and forms a second opening at the edge of the seat, so that the second shaft 5 can slide out of the fourth sliding groove 44 from the second opening, resulting in a simple mating structure.

The dimension of the first opening is greater than the dimension of the third sliding groove 43, and the dimension of the second opening is greater than the dimension of the fourth sliding groove 44. The relatively larger dimensions of the first opening and the second opening can provide a certain guiding effect, facilitating the entry of the first shaft 4 into the third sliding groove 43 and the entry of the second shaft 4 into the fourth sliding groove 44.

When the seat 2 is in the first position, the third sliding groove 43 and the fourth sliding groove 44 are symmetrically arranged with respect to the first central axis M1 of the base 1; the third sliding groove 43 and the fourth sliding groove 44 are disposed at a rear end of the seat 2 or the base 1, and the third sliding groove 43 and the fourth sliding groove 44 are resectively inclined from an edge of the seat 2 or the base 1 toward the first central axis M1 of the base 1. In some other embodiments, the third sliding groove 43 and the fourth sliding groove 44 may also be disposed at a front end of the seat 2 or the base 1, arranged symmetrically with respect to the third sliding groove 43 and the fourth sliding groove 44 at the rear end, respectively.

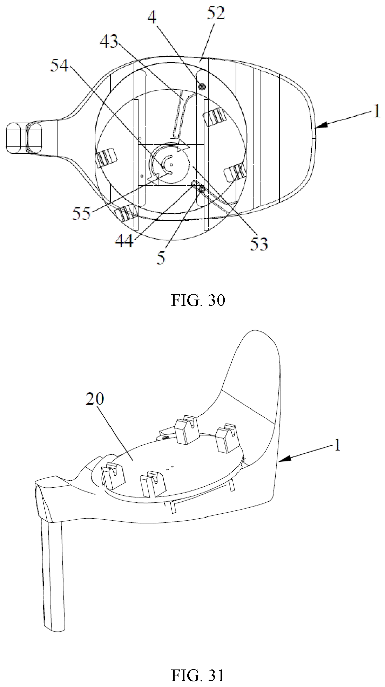

FIGs. 30 and 31 are intermediate position state diagrams of the seat 2 rotating from the first position to the second position or the third position. As shown in FIGs. 29 to 31, one of the seat 2 and the base 1 is provided with a sliding shaft 54, and the other one of the seat 2 and the base 1 is provided with a sliding groove 55; the sliding shaft 54 is slidably disposed in the sliding groove 55. When the seat 2 moves from the first position to the second position, one end of the sliding groove 55 is configured to limit the rotation angle of the seat 2; when the seat 2 moves from the first position to the third position, the other end of the sliding groove 55 is configured to limit the rotation angle of the seat 2, preventing excessive rotation of the seat 2. Optionally, the sliding groove 55 is a semicircular groove; when the seat 2 is in the first position, the sliding groove 55 is symmetrically arranged with respect to the first central axis M1 of the base 1, and the sliding shaft 54 is disposed at a middle portion of the sliding groove 55; when the seat 2 is in the second position, the sliding shaft 54 is disposed at one end of the sliding groove 55; when the seat 2 is in the third position, the sliding shaft 54 is disposed at the other end of the sliding groove 55. When the seat 2 is in the second position or the third position, the sliding groove 55 limits the seat 2 to rotate by only 90°, meeting the user's needs and facilitating the user in placing a child on or removing a child from the safety seat.

A first guiding path is formed when the seat 2 moves from the first position to the second position, and a second guiding path is formed when the seat 2 moves from the first position to the third position; the first guiding path and the second guiding path are symmetrically arranged. Because the third position is symmetrically arranged with respect to the second position, the first guiding path and the second guiding path are symmetrically arranged, ensuring that the seat 2 is able to move smoothly and stably to the second position or the third position. Optionally, the first guiding path and the second guiding path are symmetrically arranged with respect to the first central axis M1 of the base 1, so that the external position states of the seat 2 in the second position and the third position are symmetric with respect to the first central axis M1 of the base 1.

The first guiding path and the second guiding path are both straight lines, and the first guiding path and the second guiding path connect with each other. The first guiding path and the second guiding path are both independent movement paths; that is, the first guiding path does not intersect the first motion path, and the second guiding path does not intersect the second motion path. Optionally, one of the seat 2 and the base 1 is provided with a sliding member 53 and is circumferentially rotatably connected to the sliding member 53, and the other one is provided with a base sliding groove 52. When the seat 2 moves along the first motion path, the sliding member 53 slides in the base sliding groove 52 to form the first guiding path, and the seat 2 rotates circumferentially with respect to the base 1; when the seat 2 moves along the second motion path, the sliding member 53 slides in the base sliding groove 52 to form the second guiding path, and the seat 2 rotates circumferentially with respect to the base 1. The base sliding groove 52 extends in the left-right direction and is symmetrically arranged with respect to the first central axis M1 of the base 1; when the seat 2 is in the first position, the sliding member 53 is disposed at a middle position of the base sliding groove 52; when the seat 2 moves from the first position to the second position, the sliding member 53 slides toward one end of the base sliding groove 52; when the seat 2 moves from the first position to the third position, the sliding member 53 slides toward the other end of the base sliding groove 52.

Optionally, the seat 2 is provided with a sliding member 53, the base 1 is provided with a base sliding groove 52, and the seat 2 is circumferentially rotatably connected to the sliding member 53. The base 1 is provided with a supporting member 3, and the base sliding groove 52 is disposed on the supporting member 3. The sliding member 53 is an H-shaped structure; both ends of the sliding member 53 are slidably connected to the base sliding groove 52, and the middle portion of the sliding member 53 is circumferentially rotatably connected to the seat 2.

The supporting member 3 is disc-shaped and is able to rotate on the base 1 about the base axis a extending in the up-down direction, so that the supporting member 3 rotates 180° or 360° as a whole, enabling the seat 2 to switch between a forward-facing orientation and a rearward-facing orientation; the centers of curvature of the above-mentioned third sliding groove 43 and fourth sliding groove 44 are also offset from the center of the supporting member 3.

The sliding mating portion is the base sliding groove 52 disposed on the base, and the sliding member 53 slides along the base sliding groove 52; the first shaft 4 and the second shaft 5 are disposed beside the base sliding groove 52.

When the seat 2 moves from the first position to the second position, the sliding member 53 and the first shaft 4 approach each other and then move away from each other;
when the seat 2 moves from the first position to the third position, the sliding member 53 and the second shaft 5 approach each other and then move away from each other.

The sliding member 53 is a pin slidably disposed in the base sliding groove 52, or the sliding member 53 is a slider slidably disposed in the base sliding groove 52.

A ratio of the length to the width of the base sliding groove 52 is greater than 2.5.

As shown in FIGs. 28 to 29, one of the seat 2 and the base 1 is provided with a sliding shaft 54, and the other one of the seat 2 and the base 1 is provided with a sliding groove 55; the sliding shaft 54 is slidably disposed in the sliding groove 55. When the seat 2 moves from the first position to the second position, one end of the sliding groove 55 is configured to limit the rotation angle of the seat; when the seat 2 moves from the first position to the third position, the other end of the sliding groove 55 is configured to limit the rotation angle of the seat 2.

As shown in FIGs. 28 to 29, the sliding groove 55 is a semicircular groove; in the first position, the sliding groove 55 is symmetrically arranged with respect to the first central axis of the base 1, and the sliding shaft 54 is disposed at a middle portion of the sliding groove 55; when the seat is in the second position, the sliding shaft 54 is disposed at one end of the sliding groove 55; and when the seat 2 is in the third position, the sliding shaft 54 is disposed at the other end of the sliding groove 55.

The base 1 is provided with a base body and a supporting member 3 arranged on the base body, the seat 2 comprises a carrying body and a carrying member 20, and the carrying member 20 is arranged between the supporting member 3 and the carrying body, and the carrying member 20 is configured to engage with the carrying body.

The first shaft 4 and the second shaft 5 are disposed on the supporting member 3, the third sliding groove 43 and fourth sliding groove 44 are disposed on the side of the carrying member 3 facing away from the carrying body, and the sliding mating portion is disposed on the supporting member 3.

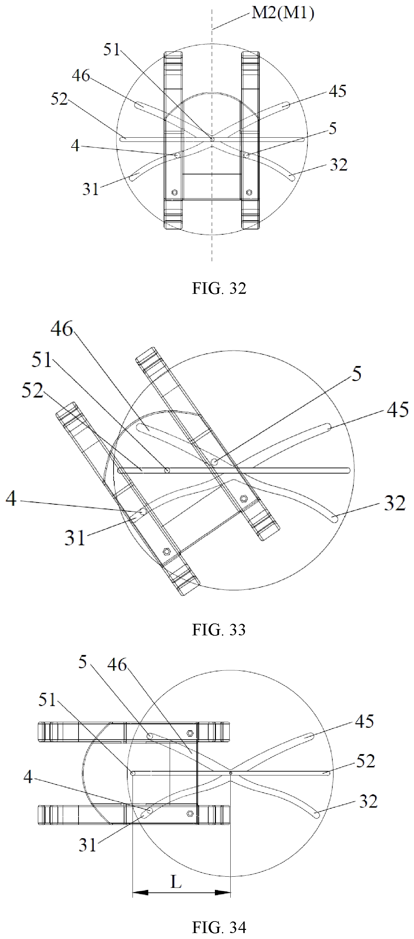

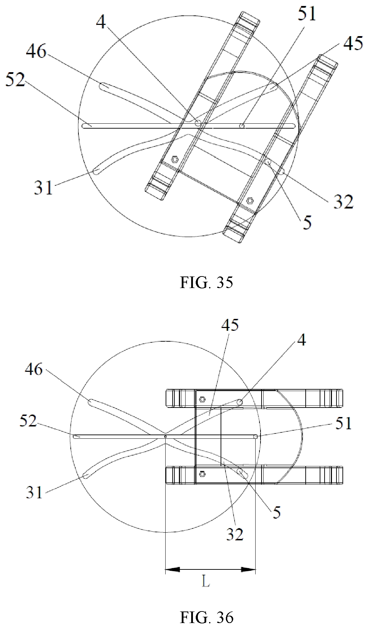

The fourth embodiment is as follows: FIG. 32 is a state diagram of the seat 2 in the first position; FIG. 33 is a state diagram of the seat 2 in an intermediate state during movement from the first position to the second position; FIG. 34 is a state diagram of the seat 2 in the second position. FIG. 35 is a state diagram of the seat 2 in an intermediate state during movement from the first position to the third position; FIG. 36 is a state diagram of the seat 2 in the third position. In other embodiments, as shown in FIGs. 32 to 36, the first motion path and the second motion path do not intersect each other, and the seat 2 always remains in the same plane when moving along the first motion path and when moving along the second motion path; optionally, the first motion path and the second motion path are in the same horizontal plane.

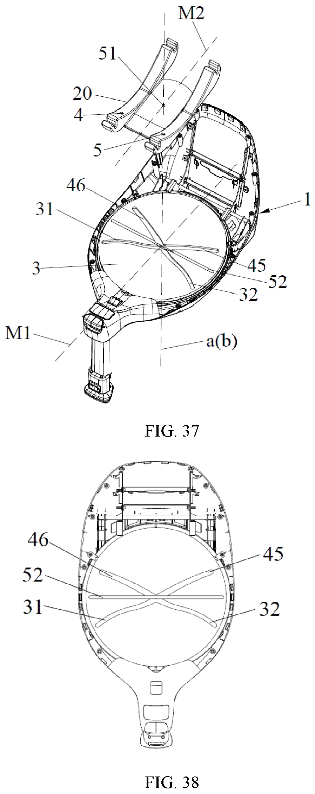

As shown in FIGs. 36 and 37, the base 1 has a base axis a; the seat 2 has a second central axis M2 extending in the longitudinal direction of the seat 2, and an axis b perpendicularly intersecting the second central axis M2; the axis b is parallel to the base axis a. When the seat 2 is in the first position, the axis b coincides with the base axis a. When the seat 2 is in the second position, the base axis a intersects the second central axis M2, and a distance L between the base axis a and the axis b is greater than 0, for example 50 mm < L < 250 mm. When the seat 2 is in the second position or the third position, the seat 2 does not displace in the front-rear direction, and extends a distance L in the left or right direction, so that the user does not need to bend over or reach into the vehicle when placing a child onto the seat 2 or lifting a child off the seat 2, making use more convenient.

The actuating structure comprises a first shaft 4 and a second shaft 5 disposed on one of the seat 2 and the base 1. When the seat 2 moves along the first motion path, the axial direction of the first shaft 4 is fixed and rotates circumferentially with respect to the seat 2 or the base 1, and the seat 2 moves along the first motion path; when the seat 2 moves along the second motion path, the axial direction of the second shaft 5 is fixed and rotates circumferentially with respect to the seat 2 or the base 1, and the seat 2 moves along the second motion path. The first shaft 4 and the second shaft 5 are disposed on the seat 2, specifically on the carrying member 20 of the seat 2. The base 1 has a first central axis M1 extending in the longitudinal direction; when the seat 2 is in the first position, the axial centerlines of the first shaft 4 and the second shaft 5 are symmetrically distributed on both sides of the first central axis M1 of the base 1 and proximate to a front end of the base 1.

The actuating structure further comprises a first sliding groove 31 and a second sliding groove 32, which are arrange to correspond to the first shaft 4 and the second shaft 5, respectively. The first sliding groove 31 and the second sliding groove 32 are disposed on the other one of the seat 2 and the base 1 and extend in arcs; the first sliding groove 31 and the second sliding groove 32 do not intersect each other, so that the first shaft 4 or the second shaft 5 drives the seat 2 to move in the first sliding groove 31 and the second sliding groove 32; the centers of curvature of the two first sliding grooves 31 and the second sliding groove 32 are offset from the first central axis M1 of the base 1. Here, the base 1 is provided with a supporting member 3, and the first sliding groove 31 and the second sliding groove 32 are disposed on the supporting member 3; the first motion path coincides with or partially coincides with the first sliding groove 31; the start and end points of the first motion path are the two end portions of the first sliding groove 31, respectively; the second motion path coincides with or partially coincides with the first sliding groove 32; the start and end points of the second motion path are the two end portions of the first sliding groove 32, respectively. The supporting member 3 is disc-shaped and is able to rotate on the base 1 about the base axis a extending in the up-down direction, so that the supporting member 3 rotates 180° or 360° as a whole, enabling the seat 2 to switch between a forward-facing orientation and a rearward-facing orientation; the centers of curvature of the above-mentioned first sliding groove 31 and second sliding groove 32 are also offset from the center of the supporting member 3.

When the seat 2 moves from the first position to the second position, the sliding member slides toward a first end of the sliding mating portion, and the first shaft 4 slides along the first sliding groove 31; as shown in FIG. 35, the sliding member is a guiding shaft 51 disposed on the carrying member 20, and the sliding mating portion is a base sliding groove 52 disposed on the supporting member 3; the guiding shaft 51 slides within the base sliding groove 52.

When the seat 2 moves from the first position to the third position, the sliding member slides toward a second end of the sliding mating portion, and the second shaft 5 slides along the second sliding groove 32.

As shown in FIGs. 32 to 36, the first sliding groove 31 as a whole extends in a direction obliquely intersecting the base sliding groove 52; the second sliding groove 32 as a whole extends in a direction obliquely intersecting the base sliding groove 52; the first sliding groove 31 and the second sliding groove 32 are symmetrically arranged in the left-right direction; and the base sliding groove 52, the first sliding groove 31 and the second sliding groove 32 are communicated with one another.

As shown in FIGs. 32 to 36, the base 1 is further provided with a first relief groove 45 and a second relief groove 46; one end of the first relief groove 45 is connected with the first sliding groove 31; one end of the second relief groove 46 is connected with the second sliding groove 32; the first relief groove 46 and the second relief groove 46 both are communicated with the base sliding groove 52.

As shown in FIGs. 32 to 36, the first sliding groove 31 and the second sliding groove 32 are on the same side of the base sliding groove 52; the first relief groove 45 and the second relief groove 46 are on the same side of the base sliding groove 52; and the first sliding groove 31 and the second relief groove 46 are on opposite sides of the base sliding groove;
when the first shaft 4 slides along the first sliding groove 31, the second shaft 5 slides along the second relief groove 46; and when the second shaft 5 slides along the second sliding groove 32, the first shaft 4 slides along the first relief groove 45.

The first shaft 4 and the second shaft 5 are disposed on the carrying member 20; the first sliding groove 31 and the second sliding groove 32 are disposed on the supporting member 3; the sliding member is disposed on the carrying member 20; the sliding mating portion is disposed on the supporting member 3.

The other one of the seat 2 and the base 1 is provided with a first relief groove 45 and a second relief groove 46. When the seat 2 moves along the first motion path, the second relief groove 46 is used for providing clearance; when the seat 2 moves along the second motion path, the first relief groove 45 is used for providing clearance. Specifically, the first relief groove 45 provides clearance for the second shaft 5, and the second relief groove 46 provides clearance for the first shaft 4. The shape of the first relief groove 45 is set according to the second motion path, and the shape of the second relief groove 46 is set according to the first motion path.

One end of the first relief groove 45 is connected with the first motion path, i.e., the first relief groove 45 is communicated with the first sliding groove 31 that forms the first motion path. One end of the second relief groove 46 is connected with the second motion path, i.e., the second relief groove 46 is communicated with the first sliding groove 32 that forms the second motion path. The first relief groove 45 and the second relief groove 46 are arranged to intersect each other; the other end of the second relief groove 46 is configured to limit the rotation angle of the seat 2 when moving from the first position to the second position; the other end of the first relief groove 45 is configured to limit the rotation angle of the seat 2 when moving from the first position to the third position. The seat 2 rotates 90° when moving from the first position to the second position or to the third position.

As shown in FIGs. 36 to 39, a first guiding path is formed when the seat 2 moves from the first position to the second position, and a second guiding path is formed when the seat 2 moves from the first position to the third position; the first guiding path and the second guiding path are symmetrically arranged. Because the third position is symmetrically arranged with respect to the second position, the first guiding path and the second guiding path are symmetrically arranged, ensuring that the seat 2 is able to move smoothly and stably to the second position or the third position. Optionally, the first guiding path and the second guiding path are symmetrically arranged with respect to the first central axis of the base 1, so that the positional states of the seat 2 in the second position and the third position are symmetric with respect to the first central axis of the base 1.

Both the first guiding path and the second guiding path are straight lines, and the first guiding path and the second guiding path connect with each other. Both the first guiding path and the second guiding path are independent motion paths, i.e., the first guiding path does not intersect the first motion path, and the second guiding path does not intersect the second motion path. Optionally, one of the seat 2 and the base 1 is provided with a guiding shaft 51; when the seat 2 moves along the first motion path, the guiding shaft 51 is axially retained and rotates circumferentially with respect to the seat 2 or the base 1 to form the first guiding path; when the seat 2 moves along the second motion path, the guiding shaft 51 is axially retained and rotates circumferentially with respect to the seat 2 or the base 1 to form the second guiding path.

The other one of the seat 2 and the base 1 is provided with a first base sliding groove and a second base sliding groove, the first base sliding groove and the second base sliding groove communicating with each other to form the base sliding groove 52; the guiding shaft 51 is able to slide in the first base sliding groove and the second base sliding groove. When the seat 2 is in the first position, the first base sliding groove and the second base sliding groove are symmetrically arranged with respect to the first central axis M1 of the base 1, i.e., the first base sliding groove and the second base sliding groove extend in the left-right direction. The first base sliding groove, the second base sliding groove, the first relief groove 45 and the second relief groove 46 intersect at a single point; the intersection point is preferably disposed at the center position of the base 1, i.e., the base axis a of the base 1 coincides with the intersection point. Optionally, the two first sliding grooves 31 and second sliding groove 32 are disposed on a side of the base sliding groove 52 proximate to the front, and the first relief groove 45 and the second relief groove 46 extend rearward toward the base sliding groove 52. When the seat 2 moves from the first position to the second position, the first shaft 4 slides within one first sliding groove 31, the second shaft 5 slides within the second relief groove 46, the seat 2 forms the first motion path, the guiding shaft 51 slides within the first base sliding groove, the guiding shaft 51 abuts against an end of the first base sliding groove, and the first base sliding groove limits the extension length of the seat 2, while the second relief groove 46 limits the rotation angle of the seat 2. When the seat 2 moves from the first position to the third position, the second shaft 5 slides within the other second sliding groove 32, the first shaft 4 slides in the first relief groove 45, the seat 2 forms the second motion path, the guiding shaft 51 slides in the second base sliding groove, the guiding shaft 51 abuts against an end of the first base sliding groove, and the second base sliding groove limits the protruding length of the seat 2, while the first relief groove 45 limits the rotation angle of the seat 2.

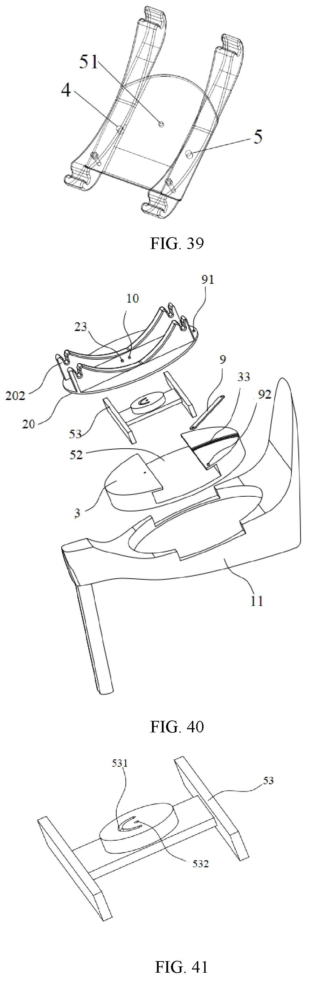

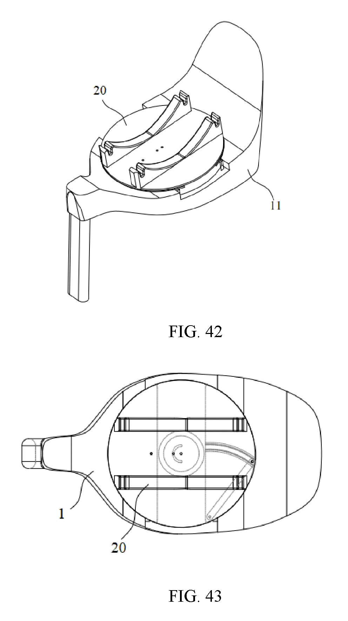

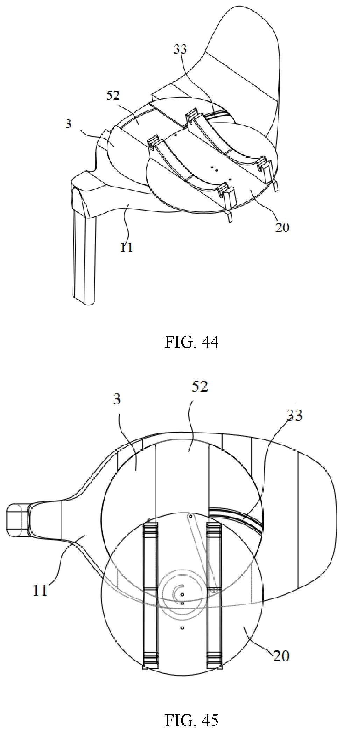

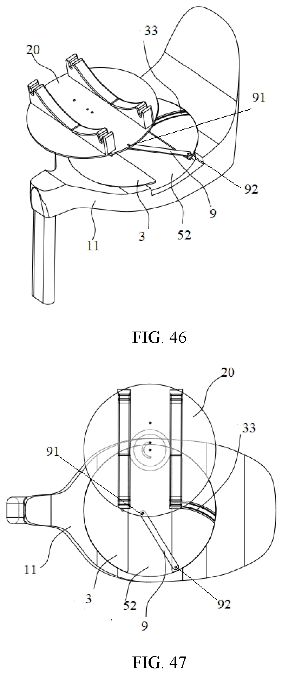

As shown in FIGs. 40 to 47, the safety seat according to the fifth embodiment of the present invention comprises a base 1, a carrying member 20 and an actuating structure. The base 1 is configured to be installed on a vehicle seat. The carrying member 22 is rotatably connected to the base 1 via a pivot shaft 10; the carrying member 20 is provided with a seat mounting structure 21 for mounting a carrying body. In this embodiment, the carrying body may specifically be a safety seat body 22 suitable for use by children of an older age group, or an infant basket 21 suitable for use by infants and young children of a younger age group. The actuating structure comprises a swing member 9 and a base sliding groove 52; one end of the swing member 9 is rotatably connected to the base 1, and the other end is rotatably connected to the carrying member 20; the pivot shaft 10 is in slide fit with the base sliding groove 52. In this embodiment, the pivot shaft 10 may be disposed on the carrying member 20 with the base sliding groove 52 on the base 1, or the pivot shaft 10 may be disposed on the base 1 with the base sliding groove 52 on the carrying member 20, as long as the pivot shaft 10 is able to slide along the base sliding groove 52 so that the carrying member 20 can move laterally with respect to the base 1. In this embodiment, the position where the swing member 9 is rotatably connected to the base 1 must be offset from the position where the pivot shaft 10 is located; that is, the position where the swing member 9 is rotatably connected to the base 1 cannot be at the center of rotation of the carrying member 20, so as to avoid the swing member 9 and the carrying member 20 rotating about the same center when the carrying member 20 is rotated, which would prevent the lateral sliding of the pivot shaft 10. Therefore, in this embodiment, the position where the swing member 9 is rotatably connected to the base 1 and the position of the pivot shaft 10 are offset from each other, so that when the carrying member 20 rotates with respect to the base 1, the pivot shaft 10 is able to slide along the base sliding groove 52 under the action of the swing member 9.

The safety seat provided in this embodiment, by providing the actuating structure, enables the carrying member 20 to also shift laterally while rotating with respect to the base 1, so that the carrying member 20 drives the carrying body thereon to extend outward a certain distance with respect to the base 1, making it convenient for the user to place a child on or remove a child from the carrying body without needing to bend over or reach into the vehicle, making use more convenient. The actuating structure comprises the swing member 9 and the base sliding groove 52; the lateral offset of the carrying member 20 is achieved through the action of the swing member 9, which has a simple structure and is reliable in use; the guidance of the lateral offset of the carrying member 20 is achieved through the sliding cooperation between the base sliding groove 52 and the pivot shaft 10, ensuring smooth movement of the carrying member 20 with respect to the base 1 and improving the comfort of the occupant.

In this embodiment, the carrying member 20 is able to move between a first position and a second position. When the carrying member 20 is in the first position, the carrying member 20 faces a first direction; when the carrying member 22 moves to the second position via the actuating structure, the central axis of the carrying member 20 deviates from the central axis of the carrying member 20 when in the first position, and the carrying member 20 faces a second direction different from the first direction. Specifically, the first position is the position where the child normally sits in the vehicle, and the second position is the position to which the carrying member 20 has extended laterally for the parent to place or remove the child from the carrying body. In this embodiment, the first direction and the second direction are perpendicular to each other, so that the carrying member 20 extends toward one side of the vehicle body during a 90° rotation, making operation more convenient for the user and ensuring that the carrying body faces outward after extension. Further, the first direction is forward or rearward, so that the child sits facing forward or rearward while in the safety seat in the vehicle, improving riding comfort and making it convenient for parents to tend to the child; the second direction is leftward or rightward, corresponding to the left or right vehicle door, so that when the carrying member 20 extends outward, the carrying body is closer to the vehicle door frame, or even partly extends outside the door frame, facilitating the parent in placing and restraining the child on the carrying body. For example, during a 90° rotation of the carrying member 20 to the left or right, the center of the carrying member 20 shifts 170 mm to the left or right, i.e., the center of the carrying body shifts 170 mm to the left or right, facilitating the user in placing a child on or removing a child from the safety seat. Correspondingly, the base sliding groove 52 of this embodiment extends in the left-right direction to enable smooth lateral offset of the carrying member 20 to the left or right during rotation. For example, the base sliding groove 52 is disposed at an upper portion of the base 1, and the pivot shaft 10 is disposed at the center of the carrying member 20.

Further, the carrying member 20 also has a third position symmetrically arranged with respect to the second position; the orientation of the carrying member 20 in the second position is opposite to the orientation of the carrying member 22 in the third position. Specifically, the second position may be the position where the carrying member 20 extends laterally to the left, and the third position may be the position where the carrying member 20 extends laterally to the right; when the carrying member 20 is in the second position, the front side of the carrying body faces the left side of the vehicle; when the carrying member 20 is in the third position, the front side of the carrying body faces the right side of the vehicle. This arrangement allows the carrying member 20 to shift both leftward and rightward, enabling the user to conveniently select switching it to the second position or the third position according to the installation position of the safety seat on the vehicle seat, with the carrying body facing the door on the corresponding side.

In this embodiment, the swing member 9 may be a swing rod, a linkage mechanism, a connecting piece, etc., as long as its two ends are rotatably connected to the base 1 and the carrying member 20, respectively, and it is able to swing as the carrying member 20 rotates. For example, in this embodiment the swing member 9 is a swing rod, which has a simple structure and is easy to install. Further, one end of the swing rod is pivotally connected to the carrying member 20 via a first swing rod shaft 91, and the other end is pivotally connected to the base 1 via a second swing rod shaft 92. When the carrying member 20 is in the first position, the line connecting the first swing rod shaft 91 and the pivot shaft 10 extends in the front-rear direction; when the carrying member 20 is in the second position, the line connecting the first swing rod shaft 91 and the pivot shaft 10 extends in the left-right direction. This arrangement ensures that the line connecting the first swing rod shaft 91 and the pivot shaft 10 is parallel to the longitudinal centerline of the carrying member 20 when the carrying member 20 is in the first position or the second position, resulting in a stable structure and reliable operation. Specifically, when the carrying member 20 is in the first position, the first swing rod shaft 91 is located directly rearward of the carrying member 20 and is disposed at a position close to an edge of the carrying member 20, making it easier for the swing rod to pull the carrying member 20 and resulting in smoother operation. Further, when the carrying member 20 is in the first position, the distance between the second swing rod shaft 92 and the first swing rod shaft 91 is approximately equal to the distance between the second swing rod shaft 92 and the pivot shaft 10, thereby ensuring the extent of lateral offset of the carrying member 20 during a 90° rotation and improving structural stability. Optionally, the base 1 is further provided with a relief groove 33; as the swing rod rotates about the second swing rod shaft 92, the first swing rod shaft 91 is able to slide along the relief groove 33, which is structurally reasonable and ensures smooth rotation of the swing rod. Specifically, the relief groove 33 is arc-shaped, and its arc radius equals the length of the swing rod.

Optionally, the actuating structure further comprises a sliding member 53 slidably disposed in the base sliding groove 52, with the carrying member 20 being rotatably connected to the sliding member 53 via the pivot shaft 10. By providing the sliding member 53, the connection between the carrying member 22 and the base 1 is more reliable, and the stability of the rotation and sliding of the carrying member 20 is improved. Specifically, the sliding member 53 of this embodiment is H-shaped; both sides of the sliding member 53 slidably cooperate with the base sliding groove 52, and a shaft hole 532 is provided in the middle for connecting with the pivot shaft 10 on the carrying member 20. Further, the safety seat also has a travel limiting structure for limiting the rotation angle of the carrying member 20. The travel limiting structure comprises a first abutting portion disposed on the sliding member 53 and a second abutting portion disposed on the carrying member 20; when the carrying member 20 moves to the second position, the second abutting portion abuts against the first abutting portion, thereby restricting the carrying member 20 from continuing to rotate in the same direction. This arrangement prevents further rotation of the carrying member 20 after it has rotated to the second position, so that the carrying member 20 faces the left or right side of the vehicle body, facilitating the parent in placing or removing the child, and improving the stability of the carrying member 20 in this position. Optionally, in this embodiment, the sliding member 53 is provided with an arc-shaped groove 531; the first abutting portion is disposed on inner walls at both ends of the arc-shaped groove 531; the second abutting portion comprises a guiding column 23 disposed on the carrying member 20; when the carrying member 20 rotates between the first position and the second position, the guiding column 23 slides along the arc-shaped groove 531; when the guiding column 23 moves to a position abutting against either end of the arc-shaped groove 531, the carrying member 20 cannot continue to rotate. Specifically, the arc-shaped groove 531 is arc-shaped, centered on the shaft hole 532 and with a radius equal to the spacing between the pivot shaft 10 and the guiding column 23, thereby enabling smooth rotation of the carrying member 20 with respect to the sliding member 53 and providing a limiting function for the carrying member 20.

Optionally, the base 1 of this embodiment comprises a base body 11 and a supporting member 3 disposed on the base body 11; the base body 11 is configured to be fixedly installed on the vehicle seat, and the supporting member 3 is configured to connect with the carrying member 20. Specifically, the carrying member 20 is rotatably connected to the supporting member 3 via the pivot shaft 10; the base sliding groove 52 is disposed at an upper portion of the supporting member 3; the pivot shaft 10 is slidably connected within the base sliding groove 52; one end of the swing member 9 is rotatably connected to the supporting member 3, and the other end is rotatably connected to the carrying member 20. Further, the supporting member 3 of this embodiment is disc-shaped and is rotatably disposed within the base body 11; the supporting member 3 is able to rotate 180° or 360° within the base body 11 about a centerline extending in the up-down direction, so that the carrying body is able to switch between a forward-facing orientation and a rearward-facing orientation, and the placement angle of the carrying body can be flexibly adjusted. Additionally, the safety seat may also be provided with a locking structure so that the supporting member 3 can be locked after rotating to a desired angle.

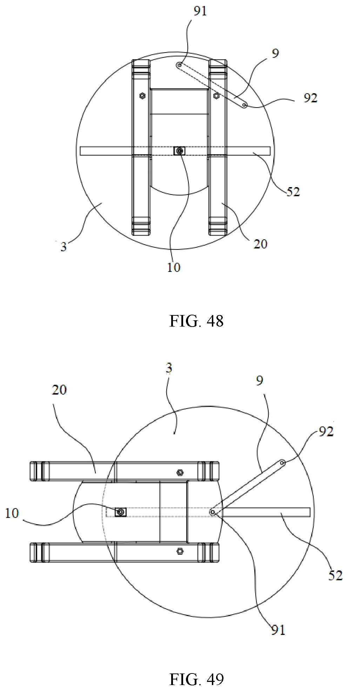

As shown in FIGs. 48 to 50, the safety seat according to the sixth embodiment of the present invention has substantially the same structure as the safety seat of the fifth embodiment, and the main difference lies in:
the safety seat of this embodiment is not provided with the sliding member 53, the relief groove 33, or the travel limiting structure.

In this embodiment, one end of the pivot shaft 10 is disposed on the carrying member 20, and the other end is rotatably mounted in the base sliding groove 52 and is able to slide along the base sliding groove 52. This arrangement makes the structure of the safety seat simpler and the installation more convenient, which is conducive to reducing manufacturing costs. Of course, to improve the smoothness of movement of the pivot shaft 10 within the base sliding groove 52, a slider may also be provided inside the base sliding groove 52, with the lower end of the pivot shaft 10 rotatably connected within the slider and the slider slidably connected within the base sliding groove 52.

This embodiment is likewise able to achieve lateral offset of the carrying member 20 while rotating, so that it extends outward with respect to the base 1; the user does not need to bend over or reach into the vehicle when placing a child into the carrying body, making use convenient and reducing the risk of knocking.

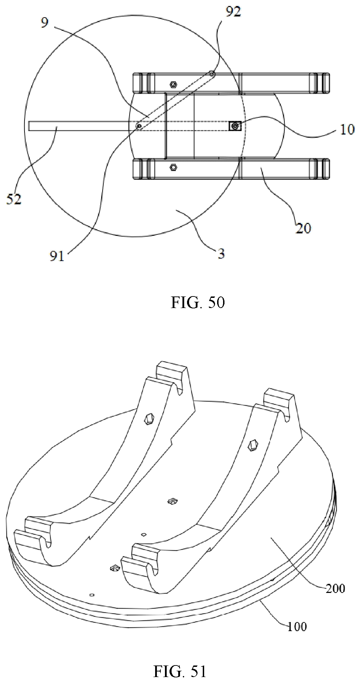

As shown in FIGs. 51 to 59, the safety seat according to embodiment seven of the present invention comprises a base frame 100, a rotating frame 200 and an actuating structure 300. The rotating frame 200 is provided with a seat mounting structure for mounting a seat, so that the seat is able to move together with the rotating frame 200. For example, the base frame 100 is installed on a rear seat of a vehicle; for example, the base frame 100 is detachably connected to the rear seat. For example, the base frame 100 may be directly connected to the rear seat, or may be connected to the rear seat via another structure; for example, the base frame 100 is connected to the rear seat via the base seat 500.

It should be noted that after the base frame 100 is connected to the rear seat, its position with respect to the rear seat in length and width directions of the vehicle cannot be adjusted; that is, the base frame 100 cannot move in the length and width directions of the vehicle.

The rotating frame 200 is movably disposed above the base frame 100. The rotating frame 200 is able to rotate and translate with respect to the base frame 100 under an external force, so that the seat on the rotating frame 200 is able to move from a position inside the vehicle to a position extending outside the vehicle, or to a position closer to the vehicle door, facilitating placing a child on the seat or removing a child from the seat.

For example, the actuating structure 300 comprises a rotating disk 320 disposed on the rotating frame 200 and an actuation guiding member 310 disposed on the base frame 100. The rotating disk 320 is able to rotate with respect to the base frame 100. In this embodiment, the rotating disk 320 is disposed on a side of the rotating frame 200 facing the base frame 100, and the actuation guiding member 310 is disposed on a side of the base frame 100 facing the rotating frame 200.

When the rotating frame 200 rotates under an external force, the rotating disk 320 is able to rotate synchronously, and while rotating, the rotating disk 320 rolls along the actuation guiding member 310 so as to cause the center of the rotating disk 320 to move along the preset direction X, thereby driving the rotating frame 200 to move in the preset direction X, so that the seat on the rotating frame 200 is able to move from a position inside the vehicle to a position extending outside the vehicle or closer to the vehicle door. For example, for the application of the safety seat in a vehicle, the preset direction X is the left-right direction of the vehicle. The actuation guiding member 310 guides to ensure that the rotating disk 320 and the rotating frame 200 are able to move along the preset direction X.

The safety seat provided in this embodiment has an actuating structure 300 comprising a rotating disk 320 disposed on the rotating frame 200 and an actuation guiding member 310 disposed on the base frame 100. When the rotating frame 200 rotates, it drives the rotating disk 320 to rotate synchronously; while rotating, the rotating disk 320 rolls along the actuation guiding member 310 so as to cause the center of the rotating disk 320 to move along the preset direction X, thereby driving the rotating frame 200 to move a certain distance in the preset direction X while rotating, that is, the rotation and translation of the rotating frame 200 are simultaneous and continuous, which improves the speed and efficiency of adjusting the position of the rotating frame 200 and facilitates operation.

Moreover, the user can perform an operation to move the rotating frame 200 closer or farther away according to actual needs, providing high flexibility. For example, the user can push the rotating frame 200 according to actual needs so that the seat on the rotating frame 200 is able to at least partially move outside the vehicle or closer to the vehicle door, enabling the child on the seat to be closer to the user, facilitating corresponding operations by the user, such as adjusting the child's seating space, lifting the child, or interactive play between the child and the user; it also reduces the extent to which the user needs to bend over when placing or removing the child, providing high convenience of use.

Optionally, the actuation guiding member 310 extends along the preset direction X, and both ends of the actuation guiding member 310 in the preset direction X are flush with or located within an edge of the base frame 100, so as to prevent the provision of the actuation guiding member 310 from increasing the overall size of the safety seat.

For example, the actuation guiding member 310 extends from a side facing away from the rotating disk 320 to an edge of the base frame 100, so as to fill part of the gap between the base frame 100 and the rotating frame 200, reducing the chance of dust accumulation; additionally, the actuation guiding member 310 is also able to provide a certain support for the rotating frame 200 in the vertical direction (i.e., the axial direction of the rotating disk 320), and the rotating frame 200 is supported by the rotating disk 320 and the actuation guiding member 310, enabling the rotating frame 200 to be relatively stable and reducing the likelihood of the rotating frame 200 and seat shaking.

For example, the rotating frame 200 switches between a first position and a second position, i.e., the rotating frame 200 has a first position and a second position with respect to the base frame 100. The rotating frame 200 moves between the first position and the second position under an external force.

For example, when the rotating frame 200 is in the first position, the rotating frame 200 faces a first direction; when the rotating frame 200 is moved to the second position via the actuating structure 300, the central axis of the rotating frame 200 deviates from the central axis of the rotating frame 200 when in the first position, and the rotating frame 200 faces a second direction different from the first direction. The first direction and the second direction may be at an angle to each other, or perpendicular to each other; this embodiment is not limited thereto.

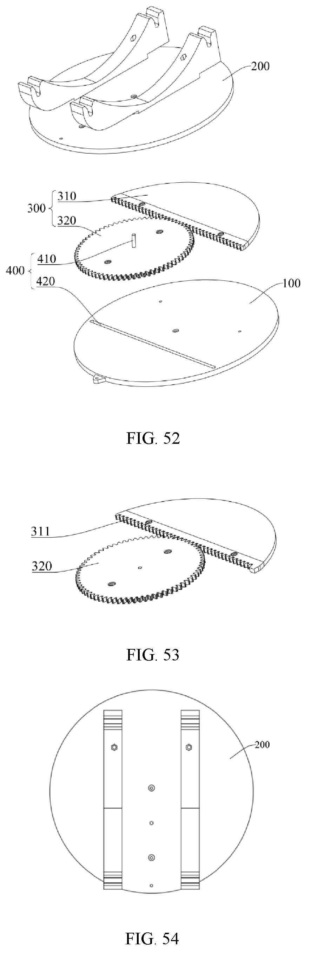

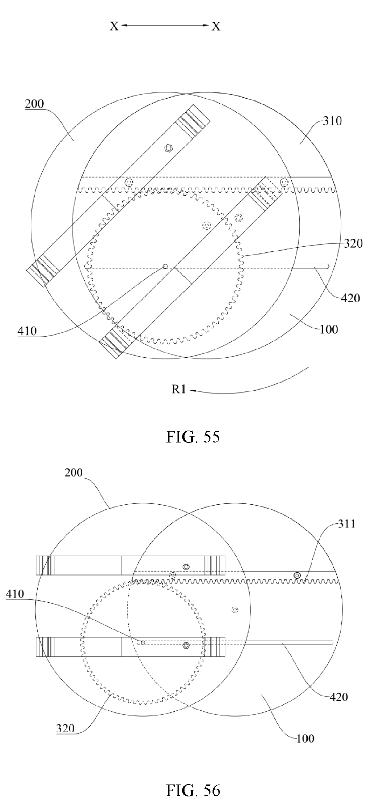

In this embodiment, the first position and the second position of the rotating frame 200 are not defined; the above first position and second position may be defined according to the required range of angular adjustment of the rotating frame 200 or the seat. Among these, FIGs. 51 and 54 are schematic views of the rotating frame 200 in the first position, FIG. 56 is a schematic view of the rotating frame 200 in the second position, and FIG. 55 is a state diagram of the rotating frame 200 during movement from the first position to the second position. For example, in the examples of FIGs. 54 and 56, when the rotating frame 200 is in the first position, the rotating frame 200 faces toward the front or rear of the vehicle, facilitating protection of the child during vehicle travel; when the rotating frame 200 is in the second position, the rotating frame 200 faces toward one side of the vehicle, enabling the child to be closer to the user.

Optionally, the safety seat further comprises a limiting structure (not shown in the figures) disposed on one of the rotating frame 200 and the base frame 100; when the rotating frame 200 is in the second position, the limiting structure contacts the other one of the rotating frame 200 and the base frame 100 so as to limit the travel of the rotating frame 200, enabling the rotating frame 200 to be positioned exactly at the second position and preventing excessive movement of the rotating frame 200. For example, the limiting structure may be a limiting block.

It should be noted that when the rotating frame 200 is in the first position, a stop structure may also be provided to restrict further movement of the rotating frame 200. Of course, when the rotating frame 200 is in the first position, no stop structure is required either, which is not limited in this embodiment.

For example, when the rotating frame 200 rotates from the first position to the second position, the length over which the rotating disk 320 rolls along the actuation guiding member 310 equals one quarter of the circumference of the rotating disk 320; that is, the rotating frame 200 reaches the second position after rotating 1/4 of a revolution from the first position. This arrangement ensures that the number of revolutions of the rotating frame 200 and the rotating disk 320 is less than one full revolution, further improving the speed and efficiency of moving the rotating frame 200 from the first position to the second position.

Of course, it is understood that the rotating frame 200 and the rotating disk 320 may also rotate an integer multiple of 1/4 turn, and may also move from the first position to the second position, which is not limited in this embodiment.

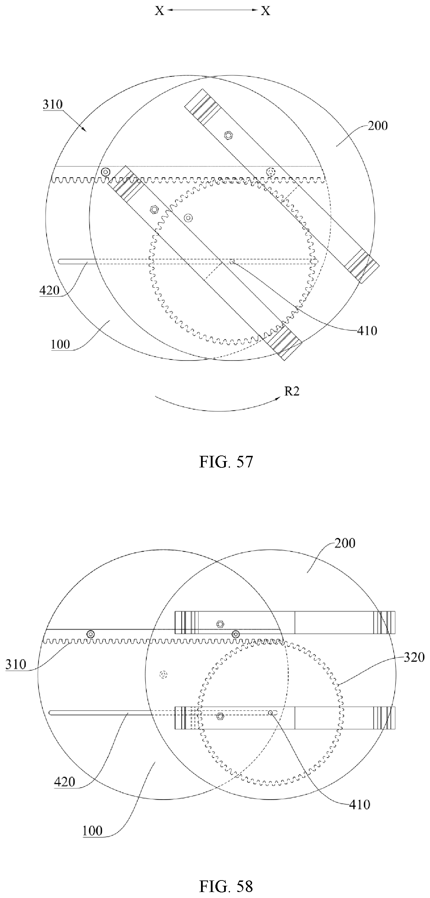

In some optional embodiments, the rotating frame 200 further has a third position symmetrically arranged with respect to the second position. The rotating frame 200 is able to move from the first position to the third position via the actuating structure 300; the orientation of the rotating frame 200 in the second position is opposite to the orientation in the third position. FIG. 58 is a schematic view of the rotating frame 200 in the third position, and FIG. 57 is a state diagram of the rotating frame 200 during movement from the first position to the third position. By enabling the rotating frame 200 to move to the third position, the rotating frame 200 is able to move both to face the second direction and to face a direction opposite to the second direction. In this way, the safety seat may be installed on a rear seat of a vehicle close to the left door, or on a rear seat close to the right door, and in both cases the purpose of getting closer to the user can be achieved, providing high flexibility and versatility and meeting the needs of different application scenarios.

It should be noted that the orientation of the rotating frame 200 in the second position is opposite to the orientation in the third position; the direction in which the rotating disk 320 rotates when the rotating frame 200 moves from the first position to the second position is opposite to the direction in which the rotating disk 320 rotates when the rotating frame 200 moves from the first position to the third position. R1 in FIG. 55 represents the rotation direction of the rotating frame 200 when moving from the first position to the second position; R2 in FIG. 57 represents the rotation direction of the rotating frame 200 when moving from the first position to the third position; R1 and R2 are opposite.

For example, when the rotating frame 200 rotates from the first position to the third position, the length over which the rotating disk 320 rolls along the actuation guiding member 310 equals one quarter of the circumference of the rotating disk 320; that is, the rotating frame 200 reaches the third position after rotating 1/4 of a turn from the first position.

For example, the rotating frame 200 may continuously move from the second position through the first position to the third position; in this case, the length over which the rotating disk 320 rolls along the actuation guiding member 310 equals one half of the circumference of the rotating disk 320.

For example, the rotating frame 200 switches between the first position and the second position.

When the rotating frame 200 is in the first position, as shown in FIG. 54, an orthographic projection of the rotating frame 200 in the axial direction coincides with an orthographic projection of the base frame 100 in the axial direction. By aligning the rotating frame 200 in the first position with the base frame 100, the shape of the safety seat is more regular, occupying less space, and facilitating mass production of the rotating frame 200 and the base frame 100.

When the rotating frame 200 is in the second position, a line connecting the center of the rotating frame 200 and the center of the base frame 100 extends along the preset direction X. Similarly, when the rotating frame 200 is in the third position, a line connecting the center of the rotating frame 200 and the center of the base frame 100 extends along the preset direction X. This causes the rotating frame 200 to be positioned directly to the left or directly to the right of the base frame 100, reducing the demand for space in the front-rear direction of the vehicle after rotation of the rotating frame 200, and providing better adaptability. It should be noted that the center of the rotating frame 200 is the geometric center of the cross-section of the rotating frame 200, and the center of the base frame 100 is the geometric center of the cross-section of the base frame 100; when the rotating frame 200 and the base frame 100 are both disc-shaped, the center is the circle center.

Optionally, as shown in FIG. 55, the actuation guiding member 310 extends in a direction parallel to the preset direction X, and when the rotating frame 200 is in the first position, the center of the rotating disk 320 is located on the centerline of the actuation guiding member 310. Specifically, the center of the rotating disk 320 is located on the centerline of the actuation guiding member 310 perpendicular to the preset direction X. The rotating disk 320 is able to roll toward both ends of the actuation guiding member 310 in the preset direction X so as to cause the rotating frame 200 to move to the second position and the third position, respectively. For example, when the rotating disk 320 rolls toward one end of the actuation guiding member 310, the rotating frame 200 moves toward the second position; when the rotating disk 320 rolls toward the other end of the actuation guiding member 310, the rotating frame 200 moves toward the third position.

For example, as shown in FIG. 52, the actuating structure 300 further comprises an auxiliary guiding structure 400. The auxiliary guiding structure 400 is configured to restrict the center of the rotating disk 320 from deviating from the preset direction X, thereby ensuring that the rotating disk 320 and the rotating frame 200 are able to move in the preset direction X. For example, the auxiliary guiding structure 400 is able to keep the distance between the center of the rotating disk 320 and the actuation guiding member 310 always equal to the radius of the rotating disk 320, so as to prevent the rotating disk 320 from moving away from the actuation guiding member 310 during rotation and to ensure that the rotating disk 320 always remains in contact with the actuation guiding member 310.

Optionally, the auxiliary guiding structure 400 comprises a guiding groove 420 and a guiding rotating shaft 410. One of the guiding groove 420 and the guiding rotating shaft 410 is disposed on the rotating disk 320, and the other one is disposed on the base frame 100. The guiding rotating shaft 410 is disposed opposite the guiding groove 420; for example, the guiding rotating shaft 410 may be at least partly located in the guiding groove 420. Moreover, the guiding rotating shaft 410 is slidably disposed along the extending direction of the guiding groove 420, so as to achieve the limitation of the guiding groove 420 on the guiding rotating shaft 410, causing the rotating disk 320 and the rotating frame 200 to move along the preset direction X. The cooperation of the guiding groove 420 with the guiding rotating shaft 410 allows the specific structure of the auxiliary guiding structure 400 to be relatively simple, easy to manufacture, and low in cost.

Further, as shown in FIG. 52, the guiding rotating shaft 410 is disposed at the center of the rotating disk 320, i.e., the guiding rotating shaft 410 is coaxially disposed with the rotating disk 320. For example, the guiding rotating shaft 410 may penetrate through the rotating disk 320, or the guiding rotating shaft 410 may be disposed only on the side of the rotating disk 320 facing the base frame 100; this embodiment is not limited thereto. The guiding groove 420 is disposed on the base frame 100; for example, the guiding groove 420 may or may not penetrate through the base frame 100 in the thickness direction; this embodiment is not limited thereto. The guiding groove 420 extends along the preset direction X; when the rotating disk 320 rolls along the actuation guiding member 310, the guiding rotating shaft 410 rotates within the guiding groove 420 or rolls along the groove wall of the guiding groove 420. By arranging the guiding groove 420 to extend along the preset direction X, the machining and manufacturing of the guiding groove 420 is facilitated.

Alternatively, the guiding rotating shaft 410 is disposed on the base frame 100, specifically on a side of the base frame 100 facing the rotating disk 320. The guiding groove 420 is disposed on the rotating disk 320, and the shape of the guiding groove 420 is an arc curving toward the center of the rotating disk 320; the guiding rotating shaft 410 is slidably disposed along the extending direction of the arc-shaped guiding groove 420, so as to ensure that the rotating disk 320 and the rotating frame 200 move in the preset direction X.

In summary, both of the above two arrangements of the guiding groove 420 and the guiding rotating shaft 410 are able to achieve the purpose of preventing the rotating shaft from moving in a direction departing from the actuation guiding member 310, and both have high reliability.

Optionally, the length of the guiding groove 420 in this embodiment is configured such that: when the rotating frame 200 is in the second position, the guiding rotating shaft 410 contacts one groove wall of the guiding groove 420 in the preset direction X, so as to limit the extent of movement of the rotating disk 320 and the rotating frame 200 in the rotation direction R1. The groove wall of the guiding groove 420 is used as the limiting structure, improving the utilization of the guiding groove 420 and eliminating the need to additionally provide a limiting structure, thereby simplifying the overall structure of the safety seat.

Similarly, the length of the guiding groove 420 is also configured such that: when the rotating frame 200 is in the third position, the guiding rotating shaft 410 contacts the other groove wall of the guiding groove 420 in the preset direction X, so as to limit the extent of movement of the rotating disk 320 and the rotating frame 200 in the rotation direction R2.

In some optional embodiments, the rotating disk 320 is a toothed disk whose outer contour is circular as a whole; when the auxiliary guiding structure 400 comprises the guiding rotating shaft 410, the guiding rotating shaft 410 is coaxially disposed with the toothed disk. The actuation guiding member 310 comprises a rack 311 extending along the preset direction X; the toothed disk meshes with the rack 311. On one hand, the rack 311 provides guidance for the rotation of the toothed disk; on the other hand, the cooperation of the rack 311 with the toothed disk improves the stability of the rotation and movement of the toothed disk, making the movement of the toothed disk smoother.

Additionally, when the rotating frame 200 is in the first position, the second position, or the third position, the rack 311 limits the toothed disk in the preset direction X; that is, directly applying a force to the rotating frame 200 in the preset direction X cannot push the toothed disk to move in the preset direction X with respect to the rack 311, and only by driving the rotating frame 200 to rotate can the toothed disk move along the rack 311, so that the rotating frame 200 is able to remain relatively stably at the first position, the second position, or the third position, reducing the likelihood of the rotating frame 200 and the seat shaking and improving the safety of the safety seat.

In some other optional embodiments, the rotating disk 320 is disc-shaped with a smooth outer circumferential surface, and a surface of the actuation guiding member 310 facing the rotating disk 320 is flat. When the rotating disk 320 rolls along the actuation guiding member 310, the outer circumferential surface of the rotating disk 320 is in frictional contact with the surface of the actuation guiding member 310 facing the rotating disk 320, which also achieves the purpose of causing the center of the rotating disk 320 to move along the preset direction X while the rotating disk 320 rolls along the actuation guiding member 310.

Optionally, the safety seat further comprises an axial locking structure (not shown in the figures) configured to restrict movement of the rotating frame 200 with respect to the base frame 100 in the axial direction of the base frame 100, ensuring smooth rotation of the rotating frame 200 with respect to the base frame 100 and smooth movement along the preset direction X.

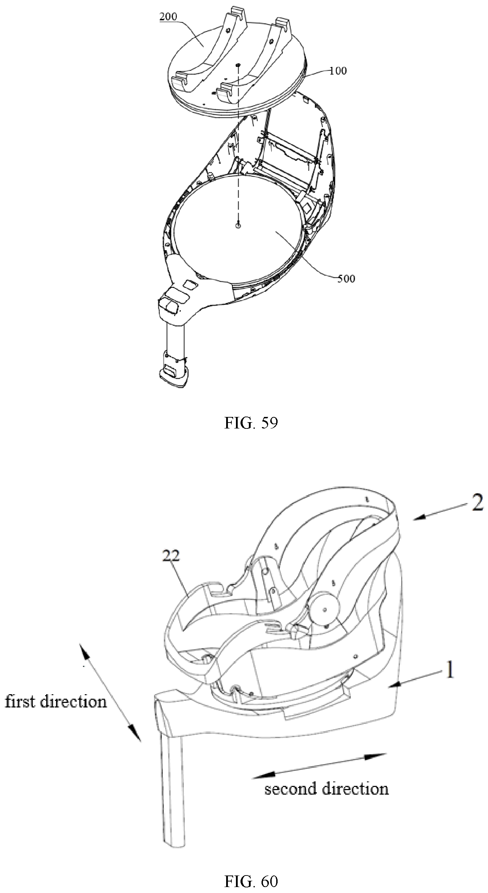

For example, as shown in FIG. 59, the safety seat further comprises a base seat 500, and the base frame 100 is rotatably connected to the base seat 500. The base seat 500 is configured to be installed on a rear seat of the vehicle, and the connection between the base seat 500 and the rear seat is a fixed connection; the base seat 500 cannot rotate or translate with respect to the rear seat. By rotatably connecting the base frame 100 to the base seat 500, the base frame 100 is able to rotate 360° with respect to the base seat 500, so as to adjust the orientation of the base frame 100, the rotating frame 200, and the seat.

For example, the central axis of the base frame 100 is parallel to or coincides with the central axis of the base seat 500; the base frame 100 is able to rotate with respect to the base seat 500 about the central axis of the base frame 100 or the central axis of the base seat 500.

In some optional embodiments, the centers of the actuation guiding member 310 and the rotating disk 320 are respectively located on opposite sides of the central axis of the base frame 100; that is, the center of the rotating disk 320 does not coincide with the central axis of the base frame 100; and the guiding groove 420 and the center of the rotating disk 320 are on the same side of the central axis of the base frame 100.

The safety seat provided in embodiment eight of the present invention (not illustrated) differs from embodiment seven in that the specific structure of the auxiliary guiding structure is different.

Specifically, in this embodiment, the rotating disk is disposed on the rotating frame, and the actuation guiding member and the auxiliary guiding structure are both disposed on the base frame.

In a direction perpendicular to the preset direction, the auxiliary guiding structure and the actuation guiding member are on opposite sides of the rotating disk, so that the rotating disk is between the auxiliary guiding structure and the actuation guiding member.

The auxiliary actuation guiding member abuts against the rotating disk to restrict the rotating disk from moving away from the actuation guiding member in the direction perpendicular to the preset direction. The rotating disk is in contact with both the actuation guiding member and the auxiliary guiding structure, thereby achieving limitation of the rotating disk by the actuation guiding member and the auxiliary guiding structure in the direction perpendicular to the preset direction, preventing the rotating disk from moving away from the actuation guiding member, and ensuring that the rotating disk and the rotating frame are able to move along the preset direction, improving structural reliability.

Further, when the actuation guiding member comprises a rack and the rotating disk is a toothed disk, the auxiliary guiding structure extends in a direction parallel to the rack, i.e., the auxiliary guiding structure extends along the preset direction. Moreover, the auxiliary guiding structure abuts against an edge of the toothed disk. It should be noted that the auxiliary guiding structure only contacts the toothed disk and does not mesh with it; if the auxiliary guiding structure were also a toothed structure, it would cause the rotating disk, the auxiliary guiding structure, and the rack to jam and be unable to move. For example, a surface of the auxiliary guiding structure facing the rotating disk is flat.

For example, the auxiliary guiding structure may be a strip-shaped structure fixedly disposed on the base frame, with both ends of the strip-shaped structure not exceeding the edge of the base frame, so as to avoid increasing the overall size of the safety seat due to the provision of the auxiliary guiding structure.

Another structures of this embodiment have similar structures and similar beneficial effects to the corresponding structures in embodiment one, which is not limited in this embodiment.

The safety seat provided in embodiment nine of the present invention (not illustrated) differs from embodiment seven in that the specific structure of the auxiliary guiding structure is different.

Specifically, in this embodiment, two sets of auxiliary guiding structures are provided. One auxiliary guiding structure is the auxiliary guiding structure of the first embodiment, and the other auxiliary guiding structure is the auxiliary guiding structure of the second embodiment.

For example, one set of auxiliary guiding structure comprises a guiding rotating shaft and a guiding groove; one of the guiding groove and the guiding rotating shaft is disposed on the rotating disk, and the other one is disposed on the base frame. The guiding rotating shaft is disposed opposite the guiding groove; for example, the guiding rotating shaft may be at least partly located in the guiding groove. Moreover, the guiding rotating shaft is slidably disposed along the extending direction of the guiding groove, so as to achieve the limitation of the guiding groove on the guiding rotating shaft, causing the rotating disk and the rotating frame to move along the preset direction. The other set of auxiliary guiding structures, in the direction perpendicular to the preset direction, has the auxiliary guiding structure and the actuation guiding member on opposite sides of the rotating disk, so that the rotating disk is between the auxiliary guiding structure and the actuation guiding member; the auxiliary actuation guiding member abuts against the rotating disk to restrict the rotating disk from moving away from the actuation guiding member in the direction perpendicular to the preset direction.

By providing two sets of auxiliary guiding structures, the limiting effect on the moving direction of the rotating shaft and the rotating frame can be further improved, and the reliability of the limitation is enhanced, ensuring that the rotating shaft and the rotating frame can move in the preset direction.

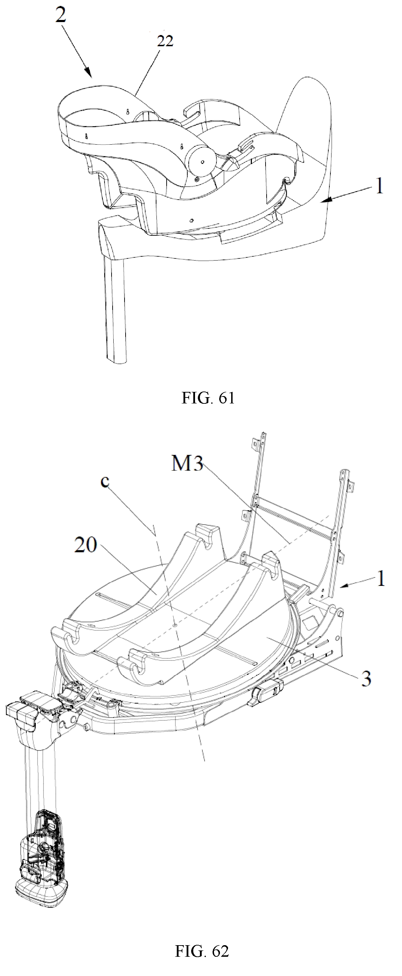

As shown in FIGs. 61 to 63, the safety seat according to embodiment ten of the present invention is intended to be installed on a vehicle seat for infants and young children to ride in. The safety seat comprises a base 1, a supporting member 3, a seat 2 and an actuating structure. The supporting member 3 is disposed on the base 1 and located above the base. The seat 2 has a first position and a second position with respect to the base 1. An actuating structure is disposed between the seat 2 and the supporting member 3, and the actuating structure is configured to cause the seat 2 to rotate between the first position and the second position with respect to the base 1.

When the seat 2 rotates from the first position to the second position, the central axis of the seat 2 shifts in the first direction with respect to the central axis c of the seat 2 in the first position. In this embodiment, the first direction is the left-right direction and the second direction is the front-rear direction; in the second position, the central axis of the seat 2 shifts in the left-right direction with respect to the central axis of the seat 2 in the first position, thereby enabling the seat 2 to shift laterally in the left-right direction during rotation, making use of the safety seat easier and facilitating placing and removing a child from the safety seat.

The seat 2 has a seating space; when the seat 2 is in the first position, the seating space faces forward or rearward; when the seat 2 is in the second position, the seating space faces leftward or rightward.

The seat 2 comprises a carrying member 20 and a carrying body; the carrying member 20 is connected to the supporting member 3, and the carrying body is connected to the carrying member 20. The carrying body and the carrying member 20 may be integrally formed or separately formed; if separately formed, the two can be assembled or disassembled, allowing different carrying bodies to be selected according to usage needs. In this embodiment, the first moving shaft 410 and the second moving shaft 510 are both disposed on the carrying member 20 and located at a bottom of the carrying member 20. It is understood that when the first moving shaft 410 and the second moving shaft 510 are disposed on the supporting member 3, the first guiding structure 42 and the second guiding structure 520 are disposed on the carrying member 20 and located at a bottom of the carrying member 20.

In a specific embodiment, the first guiding structure 42 and the second guiding structure 520 may both be grooves disposed on the carrying member 20. The first guiding structure 42 is a first groove, and the second guiding structure 520 is a second groove; in this embodiment, the first groove and the second groove are two independent grooves separated from each other. The first groove extends toward the second groove to a position at the edge of the second groove. This structural arrangement ensures that the first moving shaft 410 and the second moving shaft 510 do not interfere with each other when sliding within their respective guiding structures.

The carrying body may be the safety seat body 22 shown in FIGs. 60 and 61, suitable for children of older age groups. FIG. 60 shows the safety seat body 22 in the first position facing forward, and FIG. 61 shows the safety seat body 22 in the second position facing rearward. The carrying body may also be an infant basket, suitable for use by infants and young children of younger age groups.

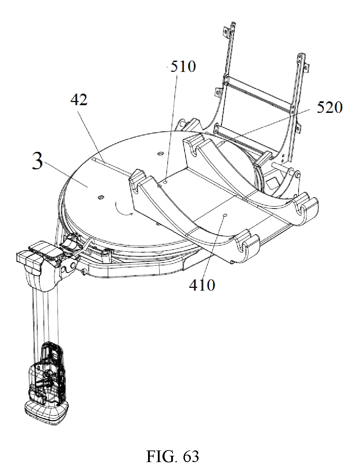

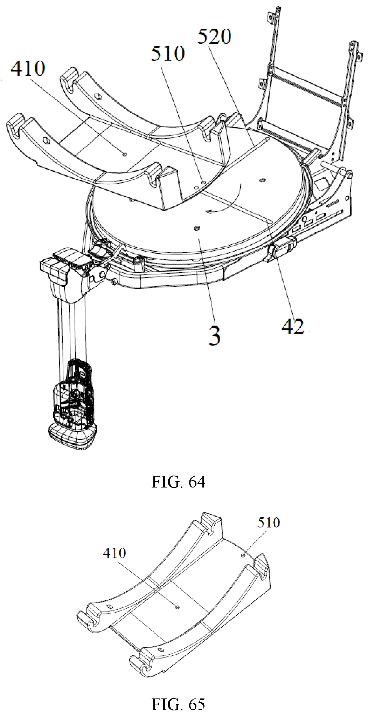

As shown in FIGs. 63 and 64, the seat 2 further has a third position symmetric with the second position. The seat 2 rotates between the first position and the third position with respect to the base 1 via the actuating structure. The orientation of the seat 2 in the second position is opposite to the orientation in the third position; for example, if the orientation of the seating space of the seat 2 in the second position is leftward, then the orientation of the seating space of the seat 2 in the third position is rightward; if the orientation of the seating space of the seat 2 in the second position is rightward, then the orientation of the seating space of the seat 2 in the third position is leftward.

When the seat 2 is in the third position, the central axis c of the seat 2 shifts in the first direction with respect to the central axis c of the seat 2 in the first position, and does not shift in the second direction with respect to the central axis c of the seat 2 in the first position. When the seat 2 is in the third position, the seat 2 is able to extend outward with respect to the base 1, so that the user does not need to bend over or reach into the vehicle when placing a child onto the seat 2 or removing a child from the seat 2, making use more convenient. Moreover, when the seat 2 is in the third position, it does not produce a certain amount of offset with respect to the base 1 in the front-rear direction, so there is no need to require the user to provide sufficient space for the installation of the safety seat in order to achieve rotation of the seat 2.

By providing the second position and the third position, the installation position of the safety seat need not be restricted; that is, whether the safety seat is installed close to the left door or close to the right door, the seat 2 is able to extend outward with respect to the base 1, improving the flexibility of use of the safety seat.

As shown in FIGs. 63, 64 and 65, the actuating structure comprises a first moving shaft 410 and a second moving shaft 510 disposed on one of the seat 2 and the supporting member 3, and a first guiding structure 42 and a second guiding structure 520 disposed on the other one of the seat 2 and the supporting member 3. The first moving shaft 410 is slidably disposed within the first guiding structure 42, and the second moving shaft 510 is slidably disposed within the second guiding structure 520.

When the seat 2 rotates from the first position to the second position, the first moving shaft 410 slides along the first guiding structure 42, the second moving shaft 510 slides along the second guiding structure 520, and in the second position, the central axis of the seat 2 shifts in the left-right direction with respect to the central axis of the seat 2 in the first position.

The first guiding structure 42 and the second guiding structure 520 are both grooves; one of them is a sliding groove and the other serves as a guiding groove. Through the sliding of the two grooves and the two shafts, synchronous sliding of the seat 2 during rotation is achieved, thereby enabling the seat 2 to shift out with respect to the base 1, making use of the seat 2 more convenient.

In this embodiment, the first moving shaft 410 and the second moving shaft 510 are each axially fixed to the seat 2 and are able to rotate circumferentially with respect to the seat 2 or the base 1. The first moving shaft 410 may be rotatably mounted on the seat 2 or fixedly mounted on the seat 2; the first moving shaft 410 is directly inserted into the first guiding structure 42 and is able to slide along the extending direction of the first guiding structure 42, while also being able to rotate circumferentially within the first guiding structure 42. The second moving shaft 510 has the same structure as the first moving shaft 410 and will not be described in further detail here.

In this embodiment, in the first position, in the front-rear direction, the second moving shaft 510 is relatively disposed at a position close to the rear side of the supporting member 3.

The second moving shaft 510 may be fixed to the seat 2 or to the base 1; in this embodiment, the second moving shaft 510 fixed to the seat 2 is taken as an example for description.

Disposing the second moving shaft 510 at a position relatively close to the rear side of the seat 2 enables the seat 2 to swing about the second moving shaft 510 during rotation, thereby causing the entire seat 2 to shift more laterally during rotation. It is understood that the closer the second moving shaft 510 is to the center of the seat 2, the less the seat 2 shifts outward during rotation; when the second moving shaft 510 is at the center position of the seat 2, the seat 2 can only rotate circumferentially and will not shift laterally.

It is understood that after the seat 2 is installed and fixed on the supporting member 3, the second moving shaft 510 is also relatively disposed at a position close to the rear side of the supporting member 3. It should be noted that being positioned close to the rear side of the seat 2 here is in comparison to being close to the front side of the seat 2; the seat 2 is generally disposed in the area between the center of the seat 2 and the rear side of the seat.

When moving toward the second position, the second moving shaft 510 relatively moves in a direction away from the rear side of the supporting member 3, and the first moving shaft 410 relatively moves in the left-right direction.

When the seat 2 has moved to the second position, the second moving shaft 510 is at a position close to the center of the supporting member 3 in the front-rear direction.

As the seat 2 rotates and moves, the second moving shaft 510 moves along the second guiding structure 520 and moves relatively forward; the second moving shaft 510 moves to a position close to the center of the seat 2, thereby enabling the seat 2 that has shifted laterally to have better supporting stability. This structural arrangement causes the second moving shaft 510 to move toward the center position of the seat 2 while the seat 2 pivots about the second moving shaft 510, so that after rotation the seat 2 does not move to an edge region of the supporting member 3, which would reduce stability.

It is understood that in order for the second moving shaft 510 to move to a position close to the center of the supporting member 3 in the front-rear direction, one end of the second guiding structure 520 will extend correspondingly to a position close to the center of the supporting member 3 in the front-rear direction.

It should be noted that the specific shape of the extension of the second guiding structure 520 is not further limited; the overall extension shape of the second guiding structure 520 may be straight or curved; of course, in other embodiments the extension shape of the second guiding structure 520 may also be set to a polyline shape. The curved second guiding structure may be a single arc or may be formed by multiple arcs.

In the first position, the first moving shaft 410 is relatively disposed at the center position of the supporting member 3 in the front-rear direction;
in the second position, the first moving shaft 410 is at a position close to an edge of the supporting member 3 in the left-right direction.

In the first position, disposing the first moving shaft 410 at the center position of the supporting member 3 in the front-rear direction allows sufficient space for the seat 2 to slide along the supporting member 3; the region at the center position of the supporting member 3 in the front-rear direction has a wider dimension in the left-right direction, thereby providing sufficient space for the relative sliding of the seat 2 on the supporting member 3. Similarly, in the second position, designing the position of the first moving shaft 410 to be relatively at the edge of the supporting member 3 in the left-right direction also provides as much space as possible for the movement of the seat 2.

When the seat 2 is in the second position, the central axis c of the seat 2 does not deviate in the front-rear direction from the central axis c of the seat 2 in the first position; that is, in the second position, the central axis of the seat 2 and the central axis of the seat 2 in the first position are at the same with respect position in the left-right direction. When the seat 2 is in the second position, it does not produce a certain amount of offset with respect to the base 1 in the front-rear direction; this structural arrangement eliminates the need to require the user to provide sufficient space for the installation of the safety seat in order to achieve rotation of the seat 2.

In the first position, the first moving shaft 410 and the second moving shaft 510 are arranged in the front-rear direction, with the first moving shaft 410 and the second moving shaft 510 at opposite positions in the front-rear direction, and the second moving shaft 510 being relatively located rearward of the first moving shaft 410;
the first moving shaft 410 is aligned with the center position of the supporting member 3 in the front-rear direction, and the second moving shaft 510 is aligned with the center position of the supporting member 3 in the front-rear direction. Aligning the first moving shaft 410 and the second moving shaft 510 with the center position of the supporting member 3 in the front-rear direction enables the leftward rotation and rightward rotation of the seat 2 to be symmetric, making installation and use of the safety seat in the vehicle more convenient.

Of course, in other embodiments, the first moving shaft 410 and the second moving shaft 510 may also be offset from the center position of the supporting member 3 in the front-rear direction; this structural arrangement is also able to achieve rotation of the seat 2 in both directions, but the offset effects in the left rotation and right rotation will differ, resulting in a poorer user experience.

In this embodiment, the seat 2 is able to rotate from the first position to the second position or the third position; the seat 2 does not shift in the axial direction of the first moving shaft 410 or the second moving shaft 510, ensuring stability of the rotation of the seat 2; and the seat 2 and the supporting member 3 are connected via the first moving shaft 410 and the second moving shaft 510, providing a simple connection structure. Through the direct cooperation of the shaft and groove, the arrangement is convenient, the number of components can be reduced, and costs are saved.

The second guiding structure 520 extends in the front-rear direction and has a front end portion 521 and a rear end portion 522 that are opposite to each other in the front-rear direction; the first guiding structure 42 has a left end portion 421 and a right end portion 422 that are opposite to each other, the left end portion 421 and the right end portion 422 being opposite to each other in the left-right direction and located relatively on both sides of the supporting member 3;
in the first position, the first moving shaft 410 is located at the center position of the first guiding structure 42 in the left-right direction.

The first moving shaft 410 being at the center position of the first guiding structure 42 in the left-right direction, and the left end portion 421 and the right end portion 422 of the first guiding structure 42 being opposite to each other in the left-right direction, enables the first moving shaft 410 to move symmetrically toward either the left end portion 421 or the right end portion 422 when switching from the first position to the second position.

When changing from the first position to the second position, the first moving shaft 410 moves toward the left end portion 421, and according to the arrangement of the first guiding structure 42, there are various types of safety seats.

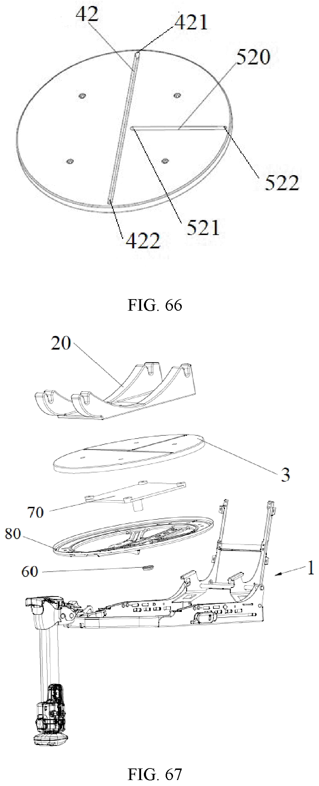

The first type of safety seat is as shown in FIG. 66, the position of the first moving shaft 410 in the second position and the position in the first position are opposite to each other in the left-right direction; when the first moving shaft 410 slides along the first guiding structure 42, the starting position of the first moving shaft 410 is arranged in the left-right direction and is on a straight line extending in the left-right direction.

The first guiding structure 42 may be a straight groove extending in the left-right direction; the extension shape of the first guiding structure 42 as a whole may also be curved or a polyline.

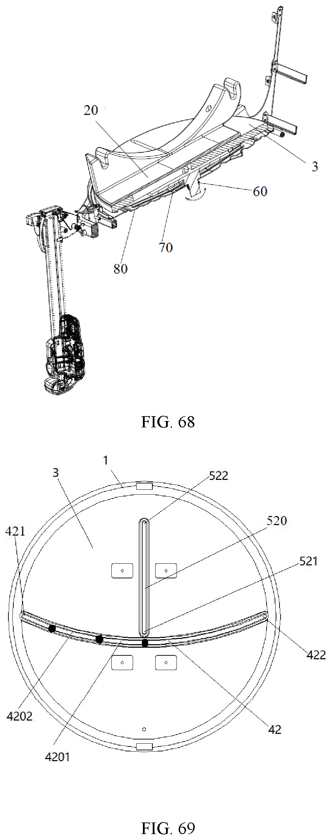

The second type of safety seat, i.e., embodiment eleven, is as shown in FIG. 69, when changing from the first position to the second position, the first moving shaft 410 moves toward the left end portion 421; the position of the first moving shaft 410 in the second position is closer to the rear side of the base 1 than the position in the first position. In the second position, the distance between the first moving shaft 410 and the rear side of the base 1 is less than the distance between the second moving shaft 510 and the rear side of the base 1.

The above structure requires that in the first position, the distance from the first moving shaft 410 to the rear side of the base 1 is L1; in the second position, the distance from the first moving shaft 410 to the rear side of the base 1 is L2, with L2 greater than L1. That is, when moving toward the second position, the first moving shaft 410 moves rearward a certain distance compared to the first position. Moreover, the first moving shaft 410 moves rearward beyond the position of the second moving shaft 510 in the second position. This structural arrangement causes the line connecting the first moving shaft 410 and the second moving shaft 510 in the second position to tilt rearward compared to the left-right direction, so that when the seat 2 turns to the left, the seating space is relatively more rearward-facing, making use of the seat 2 more convenient. Most vehicle doors open to the side and, after opening, the door does not open perpendicular to the direction of travel of the vehicle body but opens toward the rear side of the vehicle body; the above structural arrangement of the safety seat is able to better match the opening angle of the vehicle door, thereby providing a better experience after the safety seat is installed and fixed.

For the above second type of safety seat, i.e., embodiment eleven, as shown in FIGs. 69 to 70, the first guiding structure 42 as a whole is curved; from the center of the first guiding structure 42 toward the left end portion 421, the first guiding structure 42 comprises a first arc segment 4201 and a second arc segment 4202 arranged in sequence; the first arc segment 4201 as a whole is in a circular arc shape, and the radius of the circle on which the first arc segment 4201 lies equals the distance between the first moving shaft 410 and the second moving shaft 510, so that in the first arc segment 4201, the first moving shaft 410 rotates about the second moving shaft 510 as a center.

The second arc segment 4202 has a curvature smaller than that of the first arc segment 4201, and the radius of curvature of the second arc segment 4202 is greater than the distance between the first moving shaft 410 and the second moving shaft 42, so that when moving along the second arc segment 4202, the first moving shaft 410 slides in the first guiding structure 42 and the second moving shaft 510 slides in the second guiding structure 520.

It is understood that in other embodiments, a third arc segment and a fourth arc segment may also be provided between the second arc segment 4202 and the left end portion 421.

Of course, the first arc segment 4201 and the second arc segment 4202 may also be replaced by straight lines, so that the extension shape of the first guiding structure 42 as a whole is formed by multiple polyline segments.

In this embodiment, the difference in curvature between the first arc segment 4201 and the second arc segment 4202 is small, so that the entire first guiding structure 42 is arc-shaped as w whole, and the first guiding structure 42 bulges in a direction away from the second guiding structure 510, while also bulging in a direction toward the rear side of the base.

In this embodiment, at the beginning of rotation, the seat 2 first rotates about the second moving shaft 510 as the center; at this time the second moving shaft 510 is at a position close to the rear end portion 522, and the first moving shaft 410 slides within the first arc segment 4201; when the first moving shaft 410 slides to the second arc segment 4202, the second moving shaft 510 slides along the second guiding structure 520 in the direction toward the front end portion 521; the sliding of the second moving shaft 510 pushes the seat 2 to shift and slide toward the left or right, and the above structural arrangement enables the seat 2 to have a larger deflection during deflection, making the process smoother.

The seat further has a third position, the second position and the third position being symmetrically arranged; the seat 2 rotates between the first position and the third position with respect to the base 1 via the actuating structure; when the seat 2 is in the third position, the central axis of the seat 2 shifts in the left-right direction with respect to the central axis of the seat 2 in the first position;
when switching from the first position to the second position, the first moving shaft 410 moves toward the left end portion 421; when switching from the first position to the third position, the first moving shaft 410 moves toward the right end portion 422; the orientation of the seat 2 in the second position is opposite to the orientation of the seat 2 in the third position.

In other embodiments, the following design may also be adopted. When switching from the first position to the second position, the first moving shaft 410 moves toward the right end portion 422; when switching from the first position to the third position, the first moving shaft 410 moves toward the left end portion 421.

In the first position, the second moving shaft 510 is at the rear end portion 522; in the second position, the second moving shaft 510 slides along the second guiding structure 520 to the front end portion 521;
in the first position, the first moving shaft 410 is at the center position of the first guiding structure 42 in the left-right direction; the left end portion 421 and the right end portion 422 are symmetrically arranged with respect to the center of the first guiding structure 42; in the second position, the first moving shaft 410 slides along the first guiding structure 42 to the left end portion 421 or the right end portion 422;
the seat further has a third position; when the first moving shaft 410 moves to the left end portion 421 in the second position, in the third position the first moving shaft 410 moves to the right end portion 422;
when the first moving shaft 410 moves to the right end portion 422 in the second position, in the third position the first moving shaft 410 moves to the left end portion 421.

When the seat 2 moves from the first position to the second position, the first moving shaft 410 slides toward the left end portion 421 within the first guiding structure 42, and the seat 2 rotates from a forward-facing orientation to a leftward-facing orientation. The second moving shaft 510 moves from the rear end portion 522 toward the front end portion 521 along the second guiding structure 520.

When the seat 2 moves from the first position to the third position, the first moving shaft 410 slides toward the right end portion 422 within the first guiding structure 42, and the seat 2 rotates from a forward-facing orientation to a rightward-facing orientation. The second moving shaft 510 moves from the rear end portion 422 toward the front end portion 421 along the second guiding structure 520.

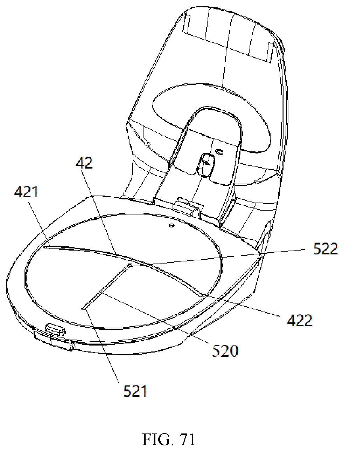

In the second type of safety seat described above, the seat 2 is installed facing forward during use. For another type where the seat 2 is installed facing rearward during use, i.e., embodiment twelve, as shown in FIG. 71, the first guiding structure 42 is also curved as a whole, the second guiding structure 520 is straight as a whole, the front end portion of the second guiding structure 520 is relatively disposed at a position close to the front side of the base 1, the second guiding structure 520 as a whole is arc-shaped and bulges in a direction away from the first guiding structure 42. In this arrangement, the moving process is similar to that of the second type of safety seat; the two differ only in how the seat is installed and used, resulting in a difference in the lateral offset during rotation, and will not be described in detail here.

When the seat 2 is in the first position, the axial centerlines of the first moving shaft 410 and the second moving shaft 510 are perpendicular to and intersect the longitudinal axis M3 of the base 1; that is, the first moving shaft 410 and the second moving shaft 510 are collinearly arranged.

In a specific embodiment, as shown in FIGs. 64, 65 and 66, the first guiding structure 42 and the second guiding structure 520 are both straight grooves; the first guiding structure 42 extends in the first direction, and the second guiding structure 520 extends in the second direction; the second guiding structure 520 is disposed on one side of the first guiding structure 42. The first moving shaft 410 slides in the first guiding structure 42, and the second moving shaft 510 slides in the second guiding structure 520.

While achieving rotation of the seat from the first position to the second position or the third position, the seat 2 in the second position or the third position is able to extend outward with respect to the base 1, facilitating the user in placing a child on the seat 2 or removing a child from the seat 2 without needing to bend over or reach into the vehicle.

Further optionally, the second guiding structure 520 is perpendicular to the first guiding structure 42, and the second guiding structure 520 is disposed at a rear end of the seat 2 or the supporting member 3; the first guiding structure 42 is symmetrically arranged with respect to the second guiding structure 520. When the seat 2 is in the first position, the second moving shaft 510 is disposed at an end of the second guiding structure 520 facing away from the first guiding structure 42; the groove wall of the second guiding structure 520 limits the position of the second moving shaft 510, and the groove wall of the first guiding structure 42 limits the first moving shaft 410 in the first direction, ensuring that the seat 2 in the first position does not displace in the second direction. During the process of the seat 2 rotating from the first position to the second position, the first moving shaft 410 slides in the first guiding structure 42 on the side of the second guiding structure 42 where the second guiding structure 520 is located; during the process of the seat 2 rotating from the first position to the second position, the second moving shaft 510 slides in the first guiding structure 42 on the other side of the second guiding structure 520; therefore, by symmetrically arranging the first guiding structure 42 with respect to the second guiding structure 520, the first motion path and the second motion path are ensured to be identical, i.e., the two rotation positions of the seat 2 are symmetric. When the seat 2 rotates to the second position or the third position, the end sidewall of the first guiding structure 42 provides a limiting effect on the first moving shaft 410, i.e., limits the position to which the seat 2 extends outward with respect to the base 1.

In some other implementable solutions, the second guiding structure 520 is perpendicular to the first guiding structure 42, and the second guiding structure 520 is disposed at a front end of the seat 2 or the supporting member 3; the first guiding structure 42 is symmetrically arranged with respect to the second guiding structure 520.

In a specific embodiment, a first motion path is formed when the seat 2 rotates from the first position to the second position, and the seat 2 is able to continuously rotate with respect to the base 1 along the first motion path. A second motion path is formed when the seat 2 rotates from the first position to the third position; the first motion path and the second motion path are both curves, and the seat 2 is able to continuously rotate with respect to the base 1 along the second motion path. Further optionally, the second motion path and the first motion path do not intersect, and the seat 2 always remains in the same plane when moving along the first motion path and along the second motion path; the seat 2 does not produce fluctuations in the direction perpendicular to the horizontal plane during rotation, ensuring stability of rotation. Moreover, the second motion path and the first motion path do not intersect; during the process of rotating to the second position, the seat 2 does not move in the second motion path and can only rotate to the second position; during the process of rotating to the third position, the seat 2 does not move in the first motion path and can only rotate to the third position, improving the controllability of the rotation position of the seat 2 and preventing the seat 2 from swaying between the first motion path and the second motion path during rotation.

When the seat 2 moves along the first motion path or along the second motion path, the first moving shaft 410 and the second moving shaft 510 are each axially retained and rotate circumferentially with respect to the seat 2 or the base 1; the seat 2 is able to rotate from the first position to the second position or the third position and does not shift in the axial direction of the first moving shaft 410 or the second moving shaft 510, ensuring stability of rotation of the seat 2; and the seat 2 and the supporting member 3 are connected via the first moving shaft 410 and the second moving shaft 510, providing a simple connection structure.

In this embodiment, the supporting member 3 enables the seat 2 to rotate 360° circumferentially with respect to the base 1 to any position, so as to conveniently adjust the orientation of the child in the vehicle and make it convenient for the user to tend to the child inside the vehicle.

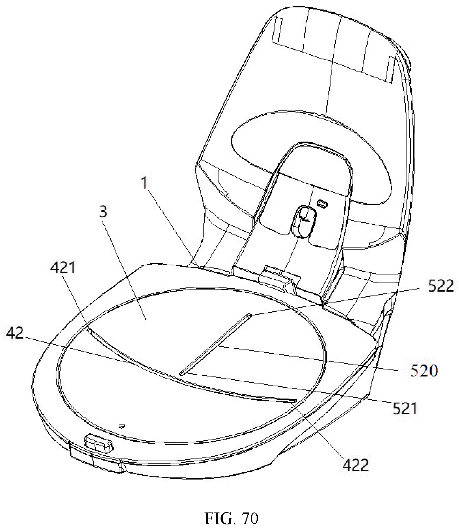

The provision of the supporting member 3 enables the seat 2 to rotate 360° circumferentially with respect to the base 1 to any position. In some embodiments, as shown in FIGs. 70 and 71, a first bottom plate 70 is fixedly disposed on the supporting member 3, and a second bottom plate 80 is disposed on the base 1; the first bottom plate 70 is rotatably connected to the second bottom plate 80 and the first bottom plate 70 is able to rotate 360° circumferentially with respect to the second bottom plate 80 to any position.

Optionally, the first bottom plate 70 is provided with a rotating shaft, one end of the rotating shaft being connected to the first bottom plate 70, the other end passing through the second bottom plate 80, and the other end of the rotating shaft being fitted with a limiting ring 60 that contacts the second bottom plate 80; the rotating shaft is able to rotate with respect to the second bottom plate 80. Optionally, the limiting ring 60 is rotatably connected to the second bottom plate 80, and the rotating shaft is fixedly connected to the limiting ring 60; the limiting ring 60 reduces wear on the rotating shaft. Alternatively, the limiting ring 60 is fixedly connected to the second bottom plate 80, and the rotating shaft is rotatably connected to the limiting ring 60; the limiting ring 60 reduces wear on the second bottom plate 80.

The above embodiments are only for illustrating the technical concepts and features of the present invention. Their purpose is to enable persons skilled in the art to understand the content of the present invention and implement it accordingly, and they should not be used to limit the scope of protection of the present invention. All equivalent changes or modifications made in accordance with the spirit of the present invention shall be encompassed within the scope of protection of the present invention.

## Claims

1. A safety seat, is **characterized in that**, the safety seat comprises:
a base;
a seat having a first position and a second position with respect to the base; and
an actuating structure disposed between the base and the seat, the seat being movable with respect to the base via the actuating structure;
wherein, when the seat is in the first position, the seat faces a first direction; when the seat is moved to the second position via the actuating structure, an axis of the seat deviates from an axis of the seat when in the first position, and the seat faces a second direction different from the first direction;
the actuating structure comprises a first shaft and a second shaft disposed on one of the seat and the base, the other one of the seat and the base is provided with grooves corresponding to the first shaft and the second shaft, and in the first position, each of the first shaft and the second shaft is positioned in one corresponding groove so as to restrict rotation of the seat with respect to the base;
when the seat moves from the first position to the second position, the second shaft disengages from the corresponding groove; and the seat rotates about the first shaft as a center of rotation.

2. The safety seat according to claim 1, is **characterized in that**, the seat further has a third position symmetrically arranged with respect to the second position;
when the seat moves from the first position to the third position, the first shaft disengages from the corresponding groove; and the seat rotates about the second shaft as a center of rotation.

3. The safety seat according to claim 2, is **characterized in that**, axial centerlines of the first shaft and the second shaft are symmetrically distributed on both sides of a first central axis M1 of the base and proximate to a front end of the base.

4. The safety seat according to claim 2, is **characterized in that**, the safety seat further comprises:
a locking structure disposed on one of the seat and the base and configured to selectively lock the first shaft and/or the second shaft; and
an unlocking structure connected to the locking structure and configured to release the locking structure.

5. The safety seat according to claim 4, is **characterized in that**, the locking structure comprises a locking member capable of locking the first shaft and/or the second shaft, the locking member being disposed on the base rotatably in a third direction or in a fourth direction different from the third direction; the unlocking structure comprises an unlocking member, the unlocking member being connected to the locking member via a pulling member, and the locking member is driven via the pulling member to rotate with respect to the base so as to unlock when the unlocking member is unlocking.

6. The safety seat according to claim 5, is **characterized in that**, the base is provided with a first pivot shaft and a second pivot shaft; the locking member rotates with respect to the first pivot shaft or the second pivot shaft in the third direction so as to cause a first locking portion of the locking member to move in a direction away from the first pivot shaft or the second pivot shaft when the unlocking member is unlocking.

7. The safety seat according to claim 5, is **characterized in that**, each of the first shaft and the second shaft has a first inclined surface, and the locking member has a second inclined surface; the locking member rotates with respect to the first shaft or the second shaft in the fourth direction when the unlocking member is unlocking, and the second inclined surface and the first inclined surface act upon each other so as to cause a second locking portion of the locking member to move in a direction toward the first shaft or the second shaft.

8. The safety seat according to claim 5, is **characterized in that**, the safety seat further comprises a restricting structure disposed between the locking member and the pulling member, the restricting structure comprising:
a connecting portion connecting the locking member and the pulling member, the connecting portion being provided with a fifth groove; and
a protrusion slidably disposed in the fifth groove;
the unlocking member drives the fifth groove to slide with respect to the protrusion via the pulling member when the unlocking member is unlocking.

9. The safety seat according to any one of claims 1 to 8, is **characterized in that**,
the base is provided with a base body and a supporting member disposed on the base body; the seat comprises a carrying body and a carrying member, the carrying member being disposed between the supporting member and the carrying body, the carrying member being configured to engage with the carrying body;
the first shaft and the second shaft are disposed on the supporting member, and the grooves are disposed on a side of the carrying member facing away from the carrying body;
the supporting member is rotatably arranged on the base body.

10. A safety seat, is **characterized in that**, the safety seat comprises:
a base;
a seat having a first position and a second position with respect to the base; and
an actuating structure disposed between the base and the seat, the seat being movable with respect to the base via the actuating structure;
wherein, when the seat is in the first position, the seat faces a first direction; when the seat is moved to the second position via the actuating structure, an axis of the seat deviates from an axis of the seat when in the first position, and the seat faces a second direction different from the first direction; the seat further has a third position symmetrically arranged with respect to the second position;
the actuating structure comprises a sliding member and a sliding mating portion cooperating with the sliding member, the sliding mating portion being disposed on the base and extending along the second direction;
the actuating structure further comprises a first shaft, a second shaft, a third sliding groove and a fourth sliding groove, the first shaft and the second shaft being disposed on the base, the third sliding groove and the fourth sliding groove being disposed on the seat; when the seat moves from the first position to the second position, the sliding member slides toward a first end of the sliding mating portion, and the first shaft slides along the third sliding groove;
when the seat moves from the first position to the third position, the sliding member slides toward a second end of the sliding mating portion, and the second shaft slides along the fourth sliding groove.

11. The safety seat according to claim 10, is **characterized in that**, one end of the third sliding groove extends through an edge of the seat to form a first opening in the seat; one end of the fourth sliding groove extends through an edge of the seat to form a second opening in the seat;
when the seat moves from the first position to the second position, the second shaft slides out of the fourth sliding groove from the second opening;
when the seat moves from the first position to the third position, the first shaft slides out of the third sliding groove from the first opening.

12. The safety seat according to claim 10, is **characterized in that**, when the seat is in the first position, the third sliding groove and the fourth sliding groove are symmetrically arranged with respect to a first central axis of the base; a first end of the third sliding groove and a first end of the fourth sliding groove are disposed at a rear end of the seat; a second end of the third sliding groove is closer to the first central axis of the base than the first end of the third sliding groove from an edge of the seat; and a second end of the fourth sliding groove is closer to the first central axis of the base than the first end of the third sliding groove from the edge of the seat.

13. The safety seat according to claim 11, is **characterized in that**, the first opening has a greater dimension than a dimension of the third sliding groove, and the second opening has a dimension greater than a dimension of the fourth sliding groove.

14. The safety seat according to claim 10, is **characterized in that**, the sliding mating portion is a base sliding groove disposed on the base, and the sliding member slides along the base sliding groove; the first shaft and the second shaft are disposed beside the base sliding groove;
when the seat moves from the first position to the second position, the sliding member and the first shaft approach each other and then move away from each other;
when the seat moves from the first position to the third position, the sliding member and the second shaft approach each other and then move away from each other.

15. The safety seat according to claim 14, is **characterized in that**, the sliding member is a pin slidably disposed in the base sliding groove, or the sliding member is a slider slidably disposed in the base sliding groove.

16. The safety seat according to claim 14, is **characterized in that**, a ratio of a length to a width of the base sliding groove is greater than 2.5.

17. The safety seat according to claim 10, is **characterized in that**, one of the seat and the base is provided with a sliding shaft, and the other one of the seat and the base is provided with a sliding groove, the sliding shaft is slidably disposed in the sliding groove; when the seat moves from the first position to the second position, one end of the sliding groove is configured to limit a rotation angle of the seat; when the seat moves from the first position to the third position, the other end of the sliding groove is configured to limit the rotation angle of the seat.

18. The safety seat according to claim 17, is **characterized in that**, the sliding groove is a semicircular groove; in the first position, the sliding groove is symmetrically arranged with respect to the first central axis of the base, and the sliding shaft is disposed at a middle portion of the sliding groove; when the seat is in the second position, the sliding shaft is disposed at one end of the sliding groove; and when the seat is in the third position, the sliding shaft is disposed at the other end of the sliding groove.

19. The safety seat according to any one of claims 10 to 18, is **characterized in that**,
the base is provided with a base body and a supporting member disposed on the base body; the seat comprises a carrying body and a carrying member, the carrying member being disposed between the supporting member and the carrying body, the carrying member being configured to engage with the carrying body;
the first shaft and the second shaft are disposed on the supporting member; the third sliding groove and the fourth sliding groove are disposed on a side of the carrying member facing away from the carrying body; the sliding mating portion is disposed on the supporting member;
the supporting member is rotatably arranged on the base body.

20. A safety seat, is **characterized in that**, the safety seat comprises:
a base;
a seat having a first position and a second position with respect to the base; and
an actuating structure disposed between the base and the seat, the seat being movable with respect to the base via the actuating structure;
wherein, when the seat is in the first position, the seat faces a first direction; when the seat is moved to the second position via the actuating structure, an axis of the seat deviates from an axis of the seat when in the first position, and the seat faces a second direction different from the first direction; the seat further has a third position symmetrically arranged with respect to the second position;
the actuating structure comprises a sliding member and a sliding mating portion cooperating with the sliding member, the sliding mating portion being disposed on the base and extending along the second direction; the sliding member is disposed on the seat;
the actuating structure further comprises a first shaft, a second shaft, a first sliding groove and a second sliding groove, the first shaft and the second shaft being disposed on the seat, the first sliding groove and the second sliding groove being disposed on the base; when the seat moves from the first position to the second position, the sliding member slides toward a first end of the sliding mating portion, and the first shaft slides along the first sliding groove;
when the seat moves from the first position to the third position, the sliding member slides toward a second end of the sliding mating portion, and the second shaft slides along the second sliding groove.

21. The safety seat according to claim 19, is **characterized in that**, the sliding mating portion is a base sliding groove disposed on the base; the first sliding groove as a whole extends in a direction obliquely intersecting the base sliding groove; the second sliding groove as a whole extends in a direction obliquely intersecting the base sliding groove; the first sliding groove and the second sliding groove are symmetrically arranged in a left-right direction; and the base sliding groove, the first sliding groove and the second sliding groove are communicated with one another.

22. The safety seat according to claim 20, is **characterized in that**, the base is further provided with a first relief groove and a second relief groove; one end of the first relief groove is connected to the first sliding groove; one end of the second relief groove is connected to the second sliding groove; the first relief groove and the second relief groove both are communicated with the base sliding groove;
the first sliding groove and the second sliding groove are on a same side of the base sliding groove; the first relief groove and the second relief groove are on a same side of the base sliding groove; and the first sliding groove and the second relief groove are on opposite sides of the base sliding groove;
when the first shaft slides along the first sliding groove, the second shaft slides along the second relief groove; and when the second shaft slides along the second sliding groove, the first shaft slides along the first relief groove.

23. The safety seat according to any one of claims 20 to 22, is **characterized in that**,
the base is provided with a base body and a supporting member disposed on the base body; the seat comprises a carrying body and a carrying member, the carrying member being disposed between the supporting member and the carrying body, the carrying member being configured to engage with the carrying body;
the first shaft and the second shaft are disposed on the carrying member; the first sliding groove and the second sliding groove are disposed on the supporting member; the sliding member is disposed on the carrying member; the sliding mating portion is disposed on the supporting member.

24. A safety seat, is **characterized in that**, the safety seat comprises:
a base;
a carrying member provided with a seat mounting structure, the carrying member being rotatably connected to the base via a pivot shaft;
an actuating structure comprising a swing member and a base sliding groove, one end of the swing member being rotatably connected to the base and the other end being rotatably connected to the carrying member; the pivot shaft is in sliding fit with the base sliding groove; one of the base and the carrying member is provided with the pivot shaft, and the other one is provided with the base sliding groove;
wherein, a position where the swing member is rotatably connected to the base and a position where the pivot shaft is located are offset from each other, such that when the carrying member rotates with respect to the base, the pivot shaft is capable of sliding along the base sliding groove under an action of the swing member.

25. The safety seat according to claim 24, is **characterized in that**, the carrying member moves between a first position and a second position; when the carrying member is in the first position, the carrying member faces a first direction; when the carrying member is moved to the second position via the actuating structure, a central axis of the carrying member deviates from a central axis of the carrying member when in the first position, and the carrying member faces a second direction different from the first direction; the first direction and the second direction are perpendicular to each other.

26. The safety seat according to claim 25, is **characterized in that**, the pivot shaft is disposed on the carrying member, the base sliding groove is disposed on the base, and the swing member is rotatably connected to the carrying member via a first swing rod shaft;
when the carrying member rotates from the first position to the second position, a line connecting the first swing rod shaft and the pivot shaft changes from extending in a front-rear direction to extending in a left-right direction.

27. The safety seat according to claim 26, is **characterized in that**, the other end of the swing member is pivotally connected to the base via a second swing rod shaft; when the carrying member is in the first position, a distance between the second swing rod shaft and the first swing rod shaft is substantially equal to a distance between the second swing rod shaft and the pivot shaft.

28. The safety seat according to claim 26, is **characterized in that**, when the carrying member is in the first position, the first swing rod shaft is located directly rearward of the carrying member, and the first swing rod shaft is disposed at a position close to an edge of the carrying member.

29. The safety seat according to claim 28, is **characterized in that**, the first direction is forward or rearward, and the second direction is leftward or rightward; the base sliding groove extends in the left-right direction on the base.

30. The safety seat according to claim 24, is **characterized in that**, the base is further provided with a relief groove for relieving an end of the swing member that is rotatably connected to the carrying member.

31. The safety seat according to claim 25, is **characterized in that**, the actuating structure further comprises a sliding member slidably disposed in the base sliding groove, the carrying member being rotatably connected to the sliding member via the pivot shaft.

32. The safety seat according to claim 31, is **characterized in that**, the safety seat further comprises a travel limiting structure for limiting a rotation angle of the carrying member; the travel limiting structure comprises a first abutting portion disposed on the sliding member and a second abutting portion disposed on the carrying member; when the carrying member moves to the second position, the second abutting portion abuts against the first abutting portion so as to restrict further relative rotation between the carrying member and the sliding member.

33. The safety seat according to claim 32, is **characterized in that**, the sliding member is provided with an arc-shaped groove, the first abutting portion is disposed on an inner wall of the arc-shaped groove, the second abutting portion comprises a guiding column disposed on the carrying member, and when the carrying member rotates between the first position and the second position, the guiding column slides along the arc-shaped groove.

34. The safety seat according to claim 24, is **characterized in that**, the swing member comprises a swing rod, a linkage mechanism, or a connecting piece.

35. The safety seat according to claim 25, is **characterized in that**, the carrying member further has a third position symmetrically arranged with respect to the second position, and an orientation of the carrying member in the second position is opposite to an orientation of the carrying member in the third position.

36. The safety seat according to any one of claims 24 to 35, is **characterized in that**, the base comprises a base body and a supporting member, the supporting member being rotatably disposed on the base body; the carrying member is rotatably connected to the supporting member via the pivot shaft; the one end of the swing member is rotatably connected to the supporting member, and the other end is rotatably connected to the carrying member.

37. A safety seat, is **characterized in that**, the safety seat comprises:
a base frame;
a rotating frame provided with a seat mounting structure;
an actuating structure comprising an actuation guiding member disposed on the base frame and a rotating disk disposed on the rotating frame;
wherein, when the rotating frame rotates, the rotating disk rotates synchronously, and during rotating, the rotating disk rolls along the actuation guiding member so as to cause a center of the rotating disk to move along a preset direction.

38. The safety seat according to claim 37, is **characterized in that**,
the rotating frame switches between a first position and a second position;
when the rotating frame is in the first position, the rotating frame faces a first direction; when the rotating frame is moved to the second position via the actuating structure, a central axis of the rotating frame deviates from the central axis of the rotating frame when in the first position, and the rotating frame faces a second direction different from the first direction;
the first direction and the second direction are perpendicular to each other.

39. The safety seat according to claim 38, is **characterized in that**, when rotating from the first position to the second position, a length over which the rotating disk rolls along the actuation guiding member is equal to one quarter of a circumference of the rotating disk.

40. The safety seat according to claim 38, is **characterized in that**, the rotating frame further has a third position symmetrically arranged with respect to the second position; the rotating frame is capable of moving from the first position to the third position via the actuating structure; an orientation of the rotating frame in the second position is opposite to an orientation of the rotating frame in the third position;
a direction along which the rotating disk rotates when the rotating frame moves from the first position to the second position is opposite to a direction along which the rotating disk rotates when the rotating frame moves from the first position to the third position.

41. The safety seat according to claim 40, is **characterized in that**, the actuation guiding member extends in a direction parallel to the preset direction; when in the first position, a center of the rotating disk is located on a centerline of the actuation guiding member; and the rotating disk is capable of rolling toward two ends of the actuation guiding member in the preset direction respectively so as to cause the rotating frame to move to the second position and the third position.

42. The safety seat according to any one of claims 37 to 41, is **characterized in that**,
the actuating structure further comprises an auxiliary guiding structure for restricting the center of the rotating disk from deviating from the preset direction; the auxiliary guiding structure comprises a guiding rotating shaft disposed at the center of the rotating disk and a guiding groove disposed opposite to the guiding rotating shaft; the guiding rotating shaft is slidably disposed in an extending direction of the guiding groove; the guiding groove is disposed on the base frame;
the guiding groove extends along the preset direction.

43. The safety seat according to claim 42, is **characterized in that**, a length of the guiding groove is configured that, when the rotating frame is in the second position, the guiding rotating shaft contacts one groove wall of the guiding groove in the preset direction.

44. The safety seat according to claim 42, is **characterized in that**, the rotating disk is a toothed disk, the toothed disk comprising an outer contour being circular as a whole; the actuation guiding member comprises a rack extending along the preset direction; and the toothed disk meshes with the rack.

45. The safety seat according to any one of claims 37 to 41, is **characterized in that**,
the actuating structure further comprises an auxiliary guiding structure for restricting the center of the rotating disk from deviating from the preset direction; the auxiliary guiding structure is disposed on the base frame;
the auxiliary guiding structure and the actuation guiding member are on opposite sides of the rotating disk, in a direction perpendicular to the preset direction;
the auxiliary actuation guiding member abuts against the rotating disk to restrict the rotating disk from moving away from the actuation guiding member in the direction perpendicular to the preset direction.

46. The safety seat according to claim 45, is **characterized in that**,
the actuation guiding member comprises a rack, the rotating disk is a toothed disk, the auxiliary guiding structure extends in a direction parallel to the rack, and the auxiliary guiding structure abuts against an edge of the toothed disk.

47. The safety seat according to any one of claims 37 to 41, is **characterized in that**, the safety seat further comprises a limiting structure disposed on one of the rotating frame and the base frame; when the rotating frame is in the second position, the limiting structure contacts the other one of the rotating frame and the base frame so as to limit a travel range of the rotating frame.

48. The safety seat according to any one of claims 37 to 41, is **characterized in that**, the safety seat further comprises a base seat, the base frame being rotatably connected to the base seat, and a central axis of the base frame being parallel to or coincident with a central axis of the base seat.

49. The safety seat according to any one of claims 37 to 41, is **characterized in that**, the safety seat further comprises an axial locking structure configured to restrict movement of the rotating frame with respect to the base frame in an axial direction of the base frame.

50. The safety seat according to any one of claims 37 to 41, is **characterized in that**,
the rotating frame switches between a first position and a second position;
when the rotating frame is in the first position, an orthographic projection of the rotating frame in an axial direction coincides with an orthographic projection of the base frame in the axial direction;
when the rotating frame is in the second position, a line connecting a center of the rotating frame and a center of the base frame extends along the preset direction.

51. The safety seat according to any one of claims 37 to 41, is **characterized in that**, the actuation guiding member extends from a side facing away from the rotating disk to an edge of the base frame.

52. A safety seat, is **characterized in that**, the safety seat comprises:
a base;
a supporting member disposed on the base and located above the base;
a seat having a first position and a second position with respect to the base;
an actuating structure disposed between the seat and the supporting member, the actuating structure comprising a first moving shaft and a second moving shaft disposed on one of the seat and the supporting member, and a first guiding structure and a second guiding structure disposed on the other one of the seat and the supporting member; the first moving shaft is slidably disposed in the first guiding structure, and the second moving shaft is slidably disposed in the second guiding structure;
wherein, when the seat rotates from the first position to the second position, the first moving shaft slides along the first guiding structure, the second moving shaft slides along the second guiding structure, and a central axis of the seat in the second position is offset from a central axis of the seat in the first position in a left-right direction.

53. The safety seat according to claim 52, is **characterized in that**, in the first position, in a front-rear direction, the second moving shaft is disposed at a position close to a rear side of the seat; the second moving shaft is also disposed at a position close to a rear side of the supporting member;
when moving toward the second position, the second moving shaft moves in a direction away from the rear side of the supporting member, and the first moving shaft moves in the left-right direction.

54. The safety seat according to claim 53, is **characterized in that**, in the second position, the second moving shaft is at a position close to a center of the supporting member in the front-rear direction.

55. The safety seat according to claim 53, is **characterized in that**, in the first position, the first moving shaft is disposed at a center position of the supporting member in the front-rear direction;
in the second position, the first moving shaft is at a position close to an edge of the supporting member in the left-right direction.

56. The safety seat according to claim 53, is **characterized in that**, in the first position, the first moving shaft and the second moving shaft are arranged in the front-rear direction, the second moving shaft being located rearward of the first moving shaft; the first moving shaft is opposite to the center position of the supporting member in the front-rear direction; and the second moving shaft is opposite to the center position of the supporting member in the front-rear direction.

57. The safety seat according to claim 56, is **characterized in that**, the first moving shaft and the second moving shaft are both disposed on the seat, and the first guiding structure and the second guiding structure are both disposed on the supporting member;
the second guiding structure extends in the front-rear direction and has a front end portion and a rear end portion that are opposite to each other in the front-rear direction; the first guiding structure has a left end portion and a right end portion disposed opposite to each other, the left end portion and the right end portion being opposite to each other in the left-right direction and located on both sides of the supporting member;
in the first position, the first moving shaft is located at a center position of the first guiding structure in the left-right direction.

58. The safety seat according to claim 57, is **characterized in that**, when switching from the first position to the second position, the first moving shaft moves toward the left end portion;
a position of the first moving shaft in the second position and a position thereof in the first position are opposite to each other in the left-right direction; or
a position of the first moving shaft in the second position is closer to a rear side of the base than a position thereof in the first position; and in the second position, a distance between the first moving shaft and the rear side of the base is less than a distance between the second moving shaft and the rear side of the base.

59. The safety seat according to claim 58, is **characterized in that**, the first guiding structure extends in the left-right direction; or
the first guiding structure is curved as a whole; from a center of the first guiding structure toward a left end portion thereof, the first guiding structure comprises a first arc segment and a second arc segment arranged in sequence; the first arc segment is in a circular arc shape as a whole, and a radius of a circle on which the first arc segment lies equals a distance between the first moving shaft and the second moving shaft, such that in the first arc segment, the first moving shaft rotates about the second moving shaft as a center.

60. The safety seat according to claim 59, is **characterized in that**, the second arc segment has a curvature smaller than that of the first arc segment, and a radius of curvature of the second arc segment is greater than the distance between the first moving shaft and the second moving shaft, such that when moving along the second arc segment, the first moving shaft slides within the first guiding structure and the second moving shaft slides within the second guiding structure.

61. The safety seat according to claim 58, is **characterized in that**, the seat further has a third position, the second position and the third position being symmetrically arranged; the seat rotates with respect to the base between the first position and the third position via the actuating structure; when the seat is in the third position, a central axis of the seat is offset in the left-right direction from a central axis of the seat in the first position;
when switching from the first position to the second position, the first moving shaft moves toward the left end portion; when switching from the first position to the third position, the first moving shaft moves toward a right end portion; and an orientation of the seat in the second position is opposite to an orientation of the seat in the third position; or
when switching from the first position to the second position, the first moving shaft moves toward a right end portion; when switching from the first position to the third position, the first moving shaft moves toward the left end portion;
in the first position, the second moving shaft is at the rear end portion; in the second position, the second moving shaft slides along the groove to the front end portion;
in the first position, the first moving shaft is at the center position of the first guiding structure in the left-right direction; the left end portion and the right end portion are symmetrically arranged with respect to the center of the first guiding structure; in the second position, the first moving shaft slides along the first guiding structure to the left end portion or the right end portion;
the seat further has a third position; the first moving shaft moves to the left end portion when in the second position, and the first moving shaft moves to the right end portion when in the third position;
the first moving shaft moves to the right end portion when in the second position, the first moving shaft moves to the left end portion when in the third position.

62. The safety seat according to claim 52, is **characterized in that**, the supporting member is rotatably mounted on the base;
a first bottom plate is fixedly disposed on the supporting member, a second bottom plate is fixedly disposed on the base, and the first bottom plate is rotatably connected to the second bottom plate and is capable of rotating 360° circumferentially with respect to the second bottom plate;
the first bottom plate is provided with a rotating shaft, one end of the rotating shaft is connected to the first bottom plate, another end of the rotating shaft passes through the second bottom plate, and a limiting ring is sleeved on the another end of the rotating shaft, the limiting ring is in contact with the second bottom plate, the rotating shaft is capable of rotating with respect to the second bottom plate.

63. The safety seat according to claim 52, is **characterized in that**, the first guiding structure and the second guiding structure are both grooves.
